(19) Europäisches Patentamt
European Patent Office
Office européen des brevets

(11) **EP 4 401 304 A1**

(12) **EUROPEAN PATENT APPLICATION**
published in accordance with Art. 153(4) EPC

(43) Date of publication:
**17.07.2024 Bulletin 2024/29**

(21) Application number: **22883194.7**

(22) Date of filing: **19.08.2022**

(51) International Patent Classification (IPC):
*H02P 25/024* (2016.01)  *H02K 16/02* (2006.01)
*H02P 5/46* (2006.01)  *H02P 23/14* (2006.01)

(52) Cooperative Patent Classification (CPC):
**H02K 16/02; H02P 5/46; H02P 23/14; H02P 25/024**

(86) International application number:
**PCT/JP2022/031347**

(87) International publication number:
**WO 2023/067882 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.10.2021 JP 2021171614**

(71) Applicant: **Mitsubishi Heavy Industries, Ltd.
Tokyo 100-8332 (JP)**

(72) Inventors:
• **HIROE, Takaharu
Tokyo 100-8332 (JP)**
• **WAKASA, Tsuyoshi
Tokyo 100-8332 (JP)**

(74) Representative: **Studio Torta S.p.A.
Via Viotti, 9
10121 Torino (IT)**

(54) **VARIABLE-SPEED POWER DEVICE AND CONTROL METHOD**

(57) This variable-speed power device is provided with: a synchronous machine having a stator provided with an armature winding to form an armature, a first rotor having magnetic poles, and a second rotor provided between the first rotor and the stator to drive a load; an induced voltage angle estimation unit for estimating the electrical angle of an induced voltage generated in the armature on the basis of a first angle of the first rotor and a second angle of the second rotor; and, an electrical power converter for adjusting the frequency of electric power for driving the synchronous machine on the basis of the estimated electrical angle of the induced voltage.

FIG. 1

EP 4 401 304 A1

**Description**

Technical Field

The present disclosure relates to a variable-speed power device and a control method.
Priority is claimed on Japanese Patent Application No. 2021-171614, filed October 20, 2021, the content of which is incorporated herein by reference.

Background Art

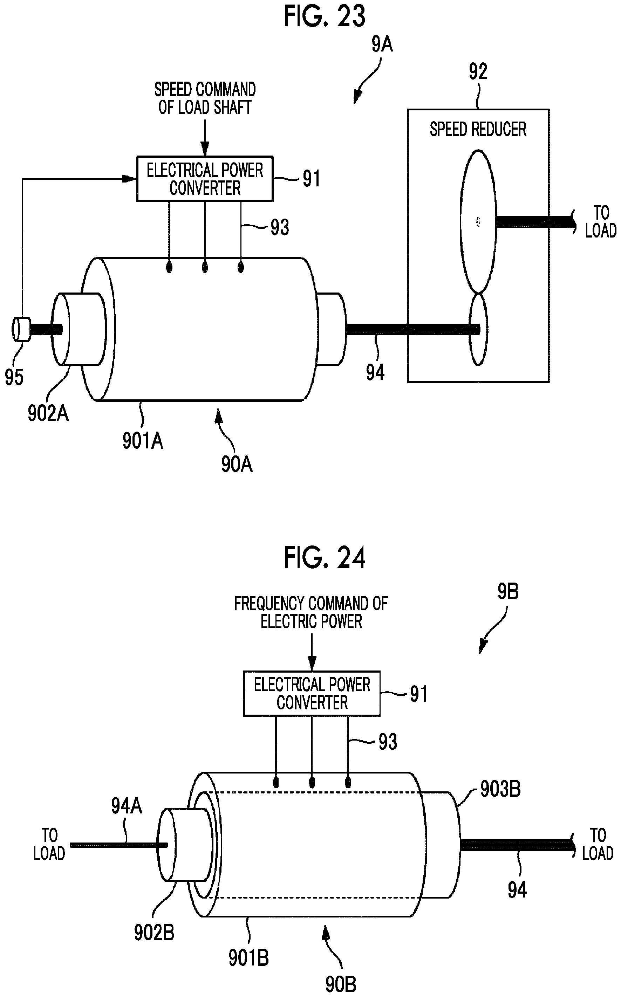

Fig. 23 shows an example of a variable-speed power device 9A using a general synchronous machine 90A. The variable-speed power device 9A is configured to include the synchronous machine 90A and an electrical power converter 91 (inverter) for variable speed acceleration. The synchronous machine 90A includes a stator 901A and a rotator 902A.
Since there is a limit to torque generated by the synchronous machine 90A, a mechanical speed reducer 92 (gear) is generally used to drive a heavy object. The speed reducer 92 is connected to an output shaft 94 of the synchronous machine 90A, and reduces the rotation speed of the synchronous machine 90A to transmit the rotation speed to a load. However, since the speed reducer 92 is a device in which gears come into contact with each other to transmit power, maintenance of a sliding portion is required. For this reason, as a variable-speed power device that does not use a speed reducer, a variable-speed power device using a synchronous machine including two rotators including a first rotator and a second rotator is considered. A synchronous machine including two rotators is called a magnetic-geared motor. Since power is transmitted between rotators in a non-contact manner by magnetic force in a magnetic-geared motor, there is a merit that a configuration can be reduced in size and weight because of the fact that the number of components is smaller than that in a configuration using a speed reducer, in addition to a merit that maintenance of a sliding portion is not required.
Fig. 24 shows an example of a variable-speed power device 9B using a magnetic-geared motor 90B. The variable-speed power device 9B is configured to include a magnetic-geared motor 90B and the electrical power converter 91. The magnetic-geared motor 90B includes a stator 901B, a first rotator 902B, and a second rotator 903B provided between the stator 901B and the first rotator 902B. The first rotator 902B may be connected to another load or power via an output shaft 94A.
The electric power that drives the synchronous machine 90A and the magnetic-geared motor 90B is generally three-phase alternating current. A rotation speed of the general synchronous machine 90A is synchronized with a frequency of driving electric power. When the frequency of the electric power is changed, the rotation speed of the synchronous machine 90A is also changed in synchronization therewith, and a speed of the load is also changed. Therefore, if a relationship between the frequency of the driving electric power and the speed of the load is examined in advance, the load can be moved at a desired speed by adjusting the frequency. The magnetic-geared motor 90B is the same as the general synchronous machine 90A, and the speed of the load can be changed by adjusting the frequency of the driving electric power.
In the general synchronous machine 90A or the magnetic-geared motor 90B, there is a possibility that step-out may occur when the load is excessive. Although it has been described that the synchronous machine 90A has an upper limit on the torque that can be output, if the load continuously exceeds the upper limit of the torque, the rotation of the synchronous machine 90A is delayed with respect to the electric power, and step-out occurs. In a step-out state, the rotation speed of the synchronous machine 90A is irrelevant to the frequency of the driving electric power, so that the load cannot be moved at a desired speed. In addition, if step-out occurs, a large vibration or noise is generated in a machine that is a load, and there is also a possibility that the machine may be broken. Therefore, it is important that step-out is not caused to occur during driving of the synchronous machine 90A and the magnetic-geared motor 90B.
In the general synchronous machine 90A, step-out is prevented by synchronizing an electrical angle of an induced voltage, which is generated by rotation of the magnetic pole of the rotator 902A in an armature (an armature winding of the stator 901A), with a voltage of the driving electric power. More specifically, a phase of a voltage of an electric power line 93 is adjusted such that a difference between the electrical angle of the induced voltage and an angle of the voltage, that is, an electrical angle of the driving electric power does not exceed ±90 degrees. Accordingly, the phase or the frequency of the electric power output by the electrical power converter 91 reflects a rotation angle or a rotation speed of the rotator 902A, and for example, when the load is excessive and the rotation of the rotator 902A is delayed, it is possible to prevent step-out by lowering the drive frequency.
The induced voltage is obtained by time-differentiating a magnetic flux interlinked to the armature. Since the interlinked magnetic flux rotates together with the rotator 902A, if an angle of the rotator 902A is known, the interlinked magnetic flux and the induced voltage obtained by differentiating the interlinked magnetic flux are also known. In the general synchronous machine 90A, since there is one rotator 902A, it is sufficient to know the angle of one rotator 902A in order to know the induced voltage generated in the armature. Since the rotator 902A is connected to the output shaft 94, an angle of the output shaft 94, that is, the angle of the rotator 902A can be measured by a rotation angle sensor 95 provided on the output shaft 94. For example, PTL 1 describes a technique in which an angle of an output shaft is measured by a rotation angle sensor, and alternating current electric power that is driven in synchronization with rotation of the output shaft is transferred. In this way, a frequency of electric power flowing through an electric power line is synchronized with the output shaft.

Citation List

Patent Literature

[PTL 1] International Publication No. WO2015/186714

Summary of Invention

Technical Problem

The magnetic-geared motor 90B includes the second rotator 903B in addition to the first rotator 902B corresponding to the rotator 902A of the synchronous machine 90A. For example, in the magnetic-geared motor including a first rotator (first rotor) and a second rotator (second rotor), PTL 1 further discloses a magnetic-geared motor that outputs power from the second rotator. That is, in the magnetic-geared motor described in PTL 1, the rotation angle sensor that measures the angle of the output shaft measures an angle of the second rotator.

In the magnetic-geared motor, the induced voltage generated in the armature depends not only on the angle of the second rotator but also on an angle of the first rotator. For this reason, in the technique described in PTL 1, an error due to ignoring influence of the first rotator may occur. In this case, there is a possibility that step-out occurs in a situation where the induced voltage is determined by the angle of the first rotator rather than that of the second rotator.

The present disclosure has been made in view of such problems, and provides a variable-speed power device and a control method capable of suppressing step-out of a synchronous machine.

Solution to Problem

According to an aspect of the present disclosure, a variable-speed power device includes a synchronous machine that includes a stator provided with an armature winding to form an armature, a first rotator including a magnetic pole, and a second rotator provided between the first rotator and the stator to drive a load; an induced voltage angle estimation unit that estimates an electrical angle of an induced voltage generated in the armature based on a first angle of the first rotator and a second angle of the second rotator; and an electrical power converter that adjusts a frequency of electric power for driving the synchronous machine based on the estimated electrical angle of the induced voltage.

According to an aspect of the present disclosure, a variable-speed power device includes a synchronous machine that includes a stator provided with an armature winding to form an armature, a first rotator including a magnetic pole, and a second rotator provided between the first rotator and the stator; and an electrical power converter that performs V/f control based on an electrical angle having a larger absolute value of an offset with respect to an electrical angle of a voltage for driving the synchronous machine among an electrical angle of the first rotator and an electrical angle of the second rotator, and adjusts a frequency of electric power for driving the synchronous machine.

According to an aspect of the present disclosure, a control method for a synchronous machine, which includes a stator provided with an armature winding to form an armature, a first rotator including a magnetic pole, and a second rotator provided between the first rotator and the stator to drive a load, includes a step of estimating an electrical angle of an induced voltage generated in the armature based on a first angle of the first rotator and a second angle of the second rotator; and a step of adjusting a frequency of electric power for driving the synchronous machine based on the estimated electrical angle of the induced voltage. Advantageous Effects of Invention

According to the variable-speed power device and the control method according to the present disclosure, it is possible to suppress the step-out of the synchronous machine.

Brief Description of Drawings

Fig. 1 is a diagram showing a functional configuration of a variable-speed power device according to a first embodiment of the present disclosure.
Fig. 2 is a cross-sectional view of a synchronous machine according to the first embodiment of the present disclosure.

Fig. 3 is a diagram for describing a concept of an operation of an electrical power converter according to the first embodiment of the present disclosure.

Fig. 4 is a diagram showing a functional configuration of a variable-speed power device according to a second embodiment of the present disclosure.

Fig. 5 is a cross-sectional view of a first rotator according to a third embodiment of the present disclosure.

Fig. 6 is a cross-sectional view of a first rotator according to a fourth embodiment of the present disclosure.

Fig. 7 is a perspective view of a first rotator according to the fourth embodiment of the present disclosure.

Fig. 8 is a diagram showing a functional configuration of a variable-speed power device according to a fifth embodiment of the present disclosure.

Fig. 9 is a diagram showing a functional configuration of a variable-speed power device according to a sixth embodiment of the present disclosure.

Fig. 10 is a diagram showing a functional configuration of a variable-speed power device according to a seventh embodiment of the present disclosure.

Fig. 11 is a diagram showing a functional configuration of a variable-speed power device according to an eighth embodiment of the present disclosure.

Fig. 12 is a diagram showing a functional configuration of an electrical power converter according to the eighth embodiment of the present disclosure.

Fig. 13 is a diagram showing a functional configuration of a variable-speed power device according to a ninth embodiment of the present disclosure.

Fig. 14 is a diagram showing a functional configuration of an electrical power converter according to the ninth embodiment.

Fig. 15 is a diagram showing an example of an induced voltage vector according to the ninth embodiment of the present disclosure.

Fig. 16 is a diagram showing a functional configuration of a variable-speed power device according to a tenth embodiment of the present disclosure.

Fig. 17 is a diagram for describing an operation of an electrical power converter according to the tenth embodiment of the present disclosure.

Fig. 18 is a diagram showing an example of a load angle according to the tenth embodiment of the present disclosure.

Fig. 19 is a diagram showing a functional configuration of a variable-speed power device according to an eleventh embodiment of the present disclosure.

Fig. 20 is a diagram showing a functional configuration of a variable-speed power device according to a twelfth embodiment of the present disclosure.

Fig. 21 is a diagram showing a functional configuration of an electrical power converter according to the twelfth embodiment of the present disclosure.

Fig. 22 is a diagram showing an example of a hardware configuration of equipment that configures the variable-speed power device according to at least one embodiment of the present disclosure.

Fig. 23 is a first diagram showing an example of a variable-speed power device in the related art.

Fig. 24 is a second view showing an example of the variable-speed power device in the related art. Description of Embodiments

<First Embodiment>

Hereinafter, a variable-speed power device 1 according to a first embodiment of the present disclosure will be described with reference to the drawings.

(Functional Configuration of Variable-Speed Power Device)

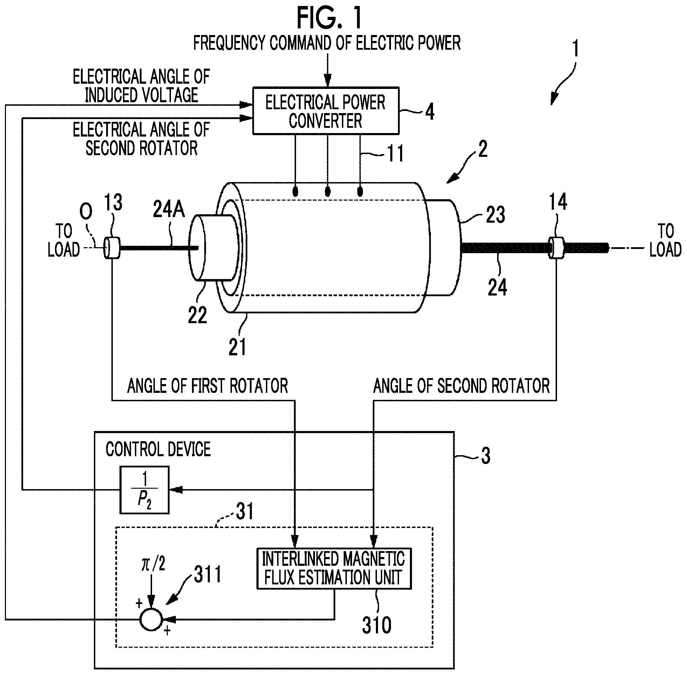

Fig. 1 is a diagram showing a functional configuration of a variable-speed power device according to the first embodiment of the present disclosure.

As shown in Fig. 1, the variable-speed power device 1 includes a synchronous machine 2, a control device 3, and an electrical power converter 4.

The synchronous machine 2 is a magnetic-geared motor. The magnetic-geared motor also serves as a magnetic geared generator. Therefore, the synchronous machine 2 according to the present embodiment represents roles of both a motor and a generator. Hereinafter, an example in which the synchronous machine 2 is used as a motor will be described.

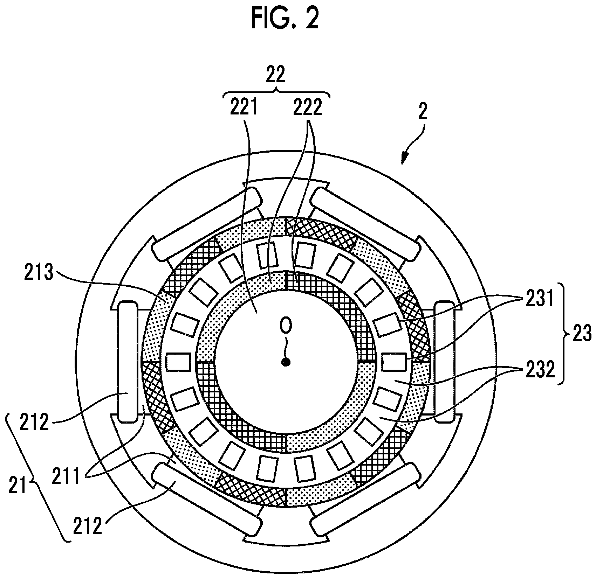

Fig. 2 is a cross-sectional view of the synchronous machine according to the first embodiment of the present disclosure.

As shown in Figs. 1 and 2, the synchronous machine 2 includes a stator 21, a first rotator 22, a second rotator 23, an output shaft 24, and an output shaft 24A.

The stator 21 is an annular structure that surrounds the first rotator 22 and the second rotator 23. In the stator 21, an armature is formed by providing an armature winding 212 on each of a plurality of teeth 211 protruding to an inside in a radial direction.

The first rotator 22 is a rotor that rotates around a rotation axis O. The first rotator 22 includes a core 221 formed of a soft magnetic material and a plurality of magnetic poles 222. The magnetic pole 222 is, for example, a permanent magnet. In an example of Fig. 2, the number of magnetic poles of the first rotator 22 is 4, but the present disclosure is not limited thereto. In another embodiment, the number of magnetic poles of the first rotator 22 may be changed. The first rotator 22 is connected to another load or power via the output shaft 24A.

In addition, in the example of Fig. 2, a configuration in which permanent magnets are disposed to cover an entire outer peripheral surface of the core 221 of the first rotator 22 is shown, but the present disclosure is not limited thereto. In another embodiment, the first rotator 22 may have a configuration in which a plurality of magnetic poles (salient poles) protruding from the outer peripheral surface to an outer side in the radial direction are integrally formed with the core 221. In this case, the first rotator 22 may not be provided with a magnet or an electromagnet. In still another embodiment, the core 221 of the first rotator 22 may be formed of a soft magnetic material such as a magnetic steel plate, and magnets may be disposed at intervals on the outer peripheral surface of the core 221. That is, the entire outer peripheral surface of the core 221 may not be covered with the magnet as in the example of Fig. 2, and a configuration in which a soft magnetic material is exposed between magnets adjacent to each other (at a boundary portion) may be adopted.

The second rotator 23 is provided between the stator 21 and the first rotator 22. The second rotator 23 is an annular structure surrounding the first rotator 22 and rotates around the rotation axis O. As shown in Fig. 1, the second rotator 23 is connected to an output shaft 24 and drives a load connected to the output shaft 24. In addition, as shown in Fig. 2, the second rotator 23 is configured such that the magnetic poles 231 and the non-magnetic portions 232 are alternately disposed in a circumferential direction. The magnetic pole 231 is made of a magnetic material (soft magnetic material or hard magnetic material). The non-magnetic portion 232 is made of a non-magnetic material. The non-magnetic portion 232 may be a gap made by cutting out a magnetic material in the radial direction.

In addition, as in the example of Fig. 2, a plurality of magnets 213 may be disposed in an annular shape between the stator 21 and the second rotator 23 (on an inner peripheral surface of the teeth 211 of the stator 21). In another embodiment, the magnet 213 may be omitted.

The control device 3 is a device for controlling an operation of the synchronous machine 2. The control device 3 according to the present embodiment includes an induced voltage angle estimation unit 31. The induced voltage angle estimation unit 31 includes an interlinked magnetic flux estimation unit 310 and a calculation unit 311.

The interlinked magnetic flux estimation unit 310 estimates an angle of the magnetic flux interlinked to the armature winding 212 based on an angle of the first rotator 22 (first angle) and an angle of the second rotator 23 (second angle). The interlinked magnetic flux estimation unit 310 according to the present embodiment acquires the angle of the first rotator 22 from a first angle sensor 13 provided in the first rotator 22, and acquires the angle of the second rotator 23 from a second angle sensor 14 provided in the second rotator 23.

The calculation unit 311 calculates an electrical angle of an induced voltage of the armature based on the estimated magnetic flux angle. The calculated electrical angle of the induced voltage is output to the electrical power converter 4.

The electrical power converter 4 is electrically connected to the synchronous machine 2 via an electric power line 11 (the armature winding 212 of the synchronous machine 2). The electrical power converter 4 adjusts a frequency, a voltage, and a current of electric power for driving the synchronous machine 2 by using a technique such as V/f control or vector control, based on a frequency command value of the electric power and the electrical angle of the induced voltage input from the control device 3.

(Operation of Control Device)

Next, an operation of the control device 3 according to the present embodiment will be described in detail. As an example, a configuration in which permanent magnets are disposed to cover the entire outer peripheral surface of the core 221 of the first rotator 22 will be specifically described. First, the angle estimation of the interlinked magnetic flux performed by the interlinked magnetic flux estimation unit 310 will be described. A general synchronous machine does not include a second rotator, so that an angle of an interlinked magnetic flux is immediately determined from a first rotator. For this reason, there is no need for angle estimation. The angle estimation is effective for a machine including a plurality of rotators such as a magnetic-geared motor. For the sake of simplifying the description, for the angle of the first rotator, when a direction in which a magnetomotive force thereof is maximized is used as a reference direction, a magnetomotive force at a position advanced by an angle $\theta$ from the reference direction of the first rotator can be approximated by following Formula (1). Here, $p_1$ is the number of poles of the first rotator. For the rotator including a magnet, a value obtained by multiplying a mechanical angle of the rotator by a value obtained by dividing the number of poles by 2 is called an electrical angle. During one mechanical rotation of the rotator, the magnetomotive force alternates $p_1/2$ times in accordance with the electrical angle.
[Formula 1]

$$M_1(\theta) = A_1 \cos \frac{p_1}{2}\theta \qquad \cdots (1)$$

It is assumed that the angle of the first rotator 22 is measured with reference to one armature of the stator 21, and the angle is $\theta_1$. In this case, from Formula (1), the magnetomotive force in the direction advanced by $\theta$ from the reference point of the stator 21 is expressed by following Formula (2).
[Formula 2]

$$M_1(\theta - \theta_1) = A_1 \cos\left(\frac{p_1}{2}(\theta - \theta_1)\right) \qquad \cdots (2)$$

Since the magnetic poles 231 and the non-magnetic portions 232 of the second rotator 23 are alternately disposed in the circumferential direction, ease of passage, that is, permeance of the magnetic flux in the second rotator 23 changes depending on the angle of the second rotator 23, in other words, a position of the second rotator 23 in the circumferential direction. For the angle of the second rotator, when a circumferential direction in which the permeance is maximized is used as a reference direction, the permeance at a position advanced on the second rotator by the angle $\theta$ from the reference direction of the second rotator can be approximated by following Formula (3). Here, $p_2$ is the number of poles of the second rotator 23. In a rotator that obtains power by a change in permeance, a value obtained by multiplying the number of poles by an angle (mechanical angle) of the rotator is an electrical angle. When the rotator mechanically makes one rotation, the permeance repeats a cycle of increase and decrease $p_2$ times. In addition, it is assumed that $B_{20} \geq B_{21} > 0$. This represents a physical constraint condition in which the permeance is always positive.
[Formula 3]

$$g_2(\theta) = B_{20} + B_{21}\frac{1 + \cos p_2\theta}{2} \qquad \cdots (3)$$

It is assumed that the angle of the second rotator 23 is measured with reference to one armature of the stator 21, and the angle is $\theta_2$. In this case, the permeance in the direction advanced by $\theta$ from the reference point of the stator 21 is expressed by following Formula (4).
[Formula 4]

$$g_2(\theta - \theta_2) = B_{20} + B_{21}\frac{1 + \cos p_2(\theta - \theta_2)}{2} \qquad \cdots (4)$$

When the angle of the first rotator 22 is $\theta_1$ and the angle of the second rotator 23 is $\theta_2$, the magnetic flux interlinked to the armature in the direction advanced by $\theta$ from the reference point of the stator 21 is represented by following Formula (5). The symbol $\phi(\theta)|\theta_1,\theta_2$ means a magnetic flux $\phi$ at the angle $\theta$ under prior information indicating that the angle of the first rotator 22 is $\theta_1$ and the angle of the second rotator 23 is $\theta_2$.
[Formula 5]

$$\phi(\theta)|\theta_1,\theta_2 \equiv g_2(\theta - \theta_2) \cdot M_1(\theta - \theta_1)$$
$$= \left(B_{20} + B_{21}\frac{1 + \cos p_2(\theta - \theta_2)}{2}\right) \cdot A_1 \cos\left(\frac{p_1}{2}(\theta - \theta_1)\right)$$
$$\cdots (5)$$

In general, since an angle $\theta_\phi$ of a magnetic flux is an angle at which the magnitude of the magnetic flux is maximized, and $\theta_\phi$ is represented by the following Formula (6). Formula (5) may be solved by a numerical search such that the partial differentiation with respect to the interlinked θ becomes zero, or may be solved by numerical calculation.
[Formula 6]

$$\theta_\phi \big| \theta_1, \theta_2 = \underset{\theta \in \left[ -\frac{\pi}{p_2}, +\frac{\pi}{p_2} \right]}{\mathrm{argmax}} \theta_\phi(\theta) \big| \theta_1, \theta_2 \qquad \cdots (6)$$

Here, the synchronous machine 2 of a type in which the magnets 213 are not provided between the second rotator 23 and the teeth 211 of the stator 21 has been described as an example, but the same calculation can be performed also for the synchronous machine 2 of another type (a type in which the magnets 213 are provided as shown in Fig. 2).

Further, here, the interlinked magnetic flux estimation unit 310 calculates the direction of the magnetic flux from a constant such as A1, B20, or B21. However, the maximum direction can also be obtained by a numerical analysis or an experiment. For example, a table for estimating the interlinked magnetic flux of the armature from the angle of the first rotator 22 and the angle of the second rotator 23 may be prepared in advance. In this case, the interlinked magnetic flux estimation unit 310 measures each of the angle $\theta_1$ of the first rotator 22 and the angle $\theta_2$ of the second rotator 23, and calculates the angle of the interlinked magnetic flux from the prepared table.

In addition, the electrical angle of the induced voltage (generally, obtained by advancing the interlinked magnetic flux by n/2 in the electrical angle) can be known from the angle of the interlinked magnetic flux. The calculation unit 311 calculates the electrical angle of the induced voltage based on the angle of the interlinked magnetic flux estimated by the interlinked magnetic flux estimation unit 310. The calculated electrical angle of the induced voltage is output to the electrical power converter 4.

(Operation of Electrical Power Converter)

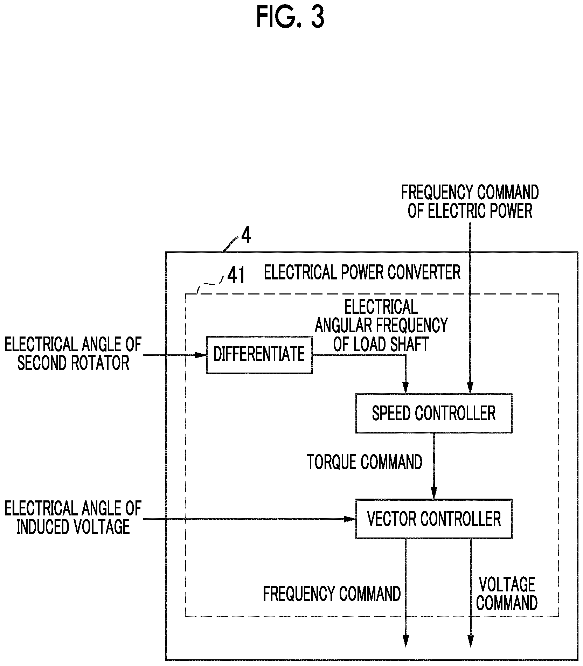

Fig. 3 is a diagram for describing a concept of an operation of an electrical power converter according to the first embodiment of the present disclosure. In the present embodiment, the output shaft is connected to the second rotator.

The electrical power converter 4 is an example in which the synchronous machine 2 is controlled by vector control based on the electrical angle of the induced voltage. Generally, the vector control adjusts output torque of the synchronous machine 2. A command value of the output torque is output by a speed controller arranged above the vector control. The speed controller inputs a frequency command of the electric power representing a speed command and an electrical angular frequency of a load shaft, and outputs a torque command by, for example, calculation of proportional integral control. In the present embodiment, the second rotator 23 corresponds to the load shaft. A vector controller outputs a voltage command and a frequency command based on the electrical angle of the induced voltage and a current of the electric power output by the electrical power converter 4. The electrical power converter 4 supplies electric power to the armature according to the voltage command and the frequency command.

(Effects of Action)

As described above, the variable-speed power device 1 according to the present embodiment includes the induced voltage angle estimation unit 31 that estimates the electrical angle of the induced voltage generated in the armature from the angle of the first rotator 22 and the angle of the second rotator 23 of the synchronous machine 2, and the electrical power converter 4 that adjusts the frequency of the electric power for driving the synchronous machine 2 based on the estimated electrical angle of the induced voltage.

In addition, the induced voltage angle estimation unit 31 according to the present embodiment includes the interlinked magnetic flux estimation unit 310 that estimates the angle of the magnetic flux interlinked to the armature winding 212 based on the angle of the first rotator 22 and the angle of the second rotator 23, and the calculation unit 311 that calculates the electrical angle of the induced voltage based on the angle of the interlinked magnetic flux and the angle of the second rotator 23.

When the vector control is adopted for the electrical power converter 4, responsiveness of mechanical output of the synchronous machine 2 is improved as compared with when the V/f control is adopted. An electrical angle of an induced voltage is required for performing vector control. However, in the related art, an electrical angle of an induced voltage is unknown, and vector control cannot obtain responsiveness that the vector control is intended to have. Moreover, since the electrical angle of the induced voltage is inaccurate, a first rotator vibrates and step-out occurs in some cases.

According to the present embodiment, vector control is performed using the electrical angle of the induced voltage estimated based on the angle of the first rotator and the angle of the second rotator, and an effect of improving responsiveness of the magnetic-geared motor or of preventing step-out can be obtained with intended responsiveness of the vector control.

<Second Embodiment>

Next, a variable-speed power device 1 according to a second embodiment of the present disclosure will be described.

The components common to those of the above-described embodiments are denoted by the same reference numerals, and a detailed description thereof is omitted.

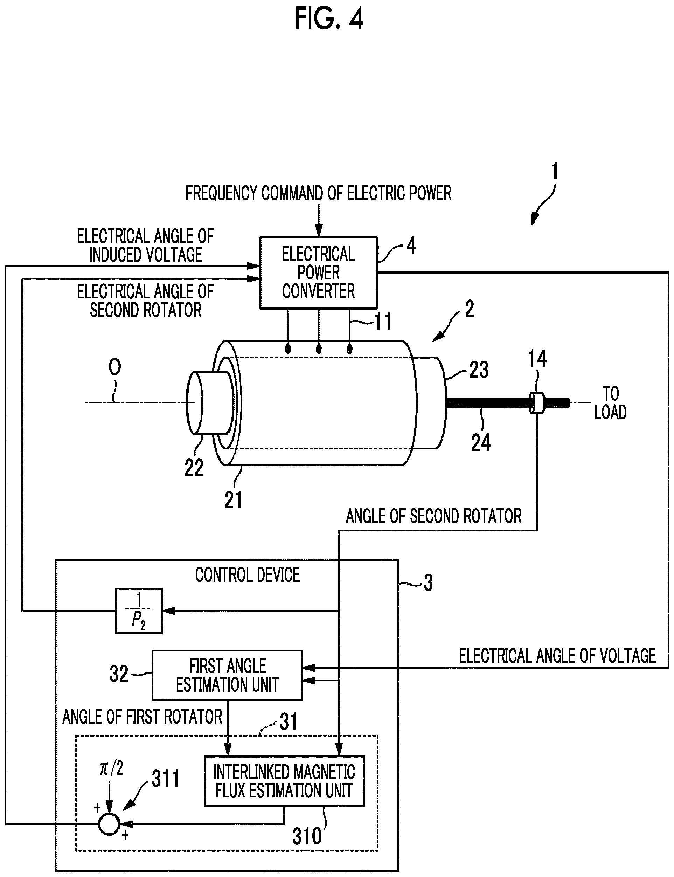

Fig. 4 is a diagram showing a functional configuration of a variable-speed power device according to the second embodiment of the present disclosure.

As shown in Fig. 4, the control device 3 according to the present embodiment further includes a first angle estimation unit 32. The first angle estimation unit 32 estimates the angle (first angle) of the first rotator 22, for example, using adjustment constants $\beta_1$ and $\beta_2$ determined in advance by a test or an analysis, based on the angle (second angle) of the second rotator 23 measured by the second angle sensor 14 and an electrical angle $\theta_V$ of a voltage.

(Operation of Control Device)

Next, an operation of the control device 3 according to the present embodiment will be described in detail. The control device 3 according to the present embodiment uses the first angle estimation unit 32 that estimates the angle of the first rotator 22 from the angle of the second rotator 23 and a voltage and a current of a three-phase alternating current, instead of the first angle sensor 13 of the first rotator 22.

When a measured value of the angle of the second rotator 23 is represented by $\theta_2$ and how many rotations the first rotator makes when the second rotator 23 makes one rotation in a no-load state is represented by $n_{12}$, the angle of the first rotator 22 can be approximated by a transfer function represented by the following Formula (7) from the measured value $\theta_2$ of the angle of the second rotator 23.

[Formula 7]

$$\theta_1 = \frac{K}{Js^2 + Cs + K}\left(\beta_1 \frac{2}{p_1}\theta_V + \beta_2 n_{12}\theta_2\right) \qquad \cdots (7)$$

Parameters $n_{12}$, J, C, and K of the transfer function are values unique to the synchronous machine 2, and can be determined by a preliminary test or the like. A value of $n_{12}$ can be calculated from the number of poles $p_2$ of the second rotator 23 and the number of poles $p_1$ of the first rotator. In a case where both the magnetic pole 222 of the first rotator 22 and the magnetic pole 231 of the second rotator 23 include a permanent magnet or an electromagnet, or in a case where both the magnetic pole 222 and the magnetic pole 231 do not include a permanent magnet or an electromagnet, it is assumed that "$n_{12} = p_2/p_1$". In a case where only the magnetic pole 222 of the first rotator 22 includes a permanent magnet or an electromagnet, "$n_{12} = 2p_2/p_1$". In a case where only the magnetic pole 231 of the second rotator 23 includes a permanent magnet or an electromagnet, "$n_{12} = p_2/(2p_1)$". The first angle estimation unit 32 performs calculation of the transfer function. In a case where it is found in a preliminary test that a value of the parameter K of the transfer function is greatly changed by the output torque of the synchronous machine, the value of K or the like may be changed according to driving of the synchronous machine.

The operations of the interlinked magnetic flux estimation unit 310 and the calculation unit 311 are the same as those in the first embodiment.

(Effects of Action)

As described above, the variable-speed power device 1 according to the present embodiment further includes the first angle estimation unit 32 that estimates the angle of the first rotator 22 based on the angle of the second rotator 23.

In this way, it is possible to avoid need for the first angle sensor 13 that measures the angle of the first rotator 22 or a wiring thereof. In this manner, it is possible to achieve compactification and cost reduction of the variable-speed power device 1.

<Third Embodiment>

Next, the variable-speed power device 1 according to a third embodiment of the present disclosure will be described. In the present embodiment, the output shaft is connected to the second rotator.

The components common to those of the above-described embodiments are denoted by the same reference numerals, and a detailed description thereof is omitted.

(Configuration of First Rotator)

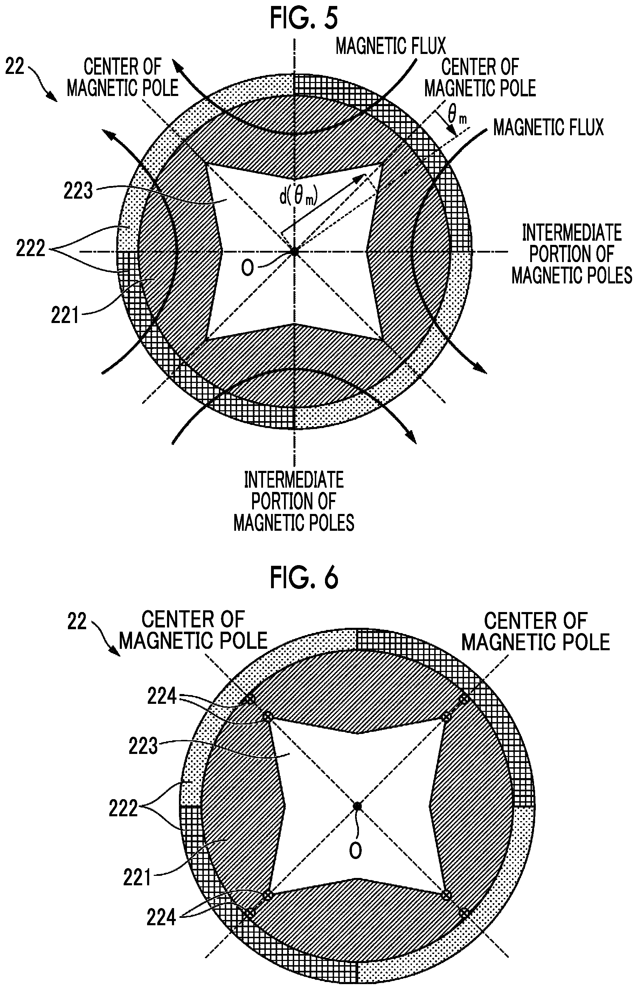

Fig. 5 is a cross-sectional view of a first rotator according to the third embodiment of the present disclosure.

As shown in Fig. 5, the first rotator 22 according to the present embodiment has a notch portion 223 formed around the rotation axis O. The notch portion 223 is formed by notching the core 221 of the first rotator 22.

In the second embodiment, the first angle estimation unit 32 estimates the angle of the first rotator 22 instead of the first angle sensor 13 of the first rotator 22. That is, the angle of the first rotator 22 is replaced with an estimated value instead of an actual value. The estimated value of the angle of the first rotator 22 is calculated by using a motion equation including inertial efficiency of the first rotator 22 and electromagnetic torque acting on the first rotator 22. The higher the natural frequency $\omega_n$ determined by a characteristic root of the motion equation, and the higher a damping ratio $\zeta$, the higher the accuracy of the estimated value of the angle of the first rotator 22. These can be achieved by reducing the inertial efficiency of the second rotator 23.

When the inertial efficiency is represented as J [kgm2], a mechanical angular gradient of the electromagnetic torque is represented as K [Nm/rad], and the mechanical angular velocity gradient of the electromagnetic torque is represented as C [Nm/(rad/s)], a characteristic equation is represented as "$Js^2 + Cs + K = 0$". A characteristic root is "$-C \pm \sqrt{(C^2 - 4KJ)}/2J$". The natural angular frequency $\omega_n$ is "$\sqrt{(K/J)}$", and the damping ratio $\zeta$ is "$C/2\sqrt{(KJ)}$".

In a case where the first rotator 22 is not subjected to the notching, since the inertial efficiency J is large, the natural angular frequency $\omega_n$ is small, the damping ratio $\zeta$ is small, and there is a possibility that the estimation accuracy of the angle of the first rotator 22 may be degraded.

In the present embodiment, the transfer function (Formula 7) described in the second embodiment is converted into a first delayed response with damping as in following Formula (8) by reducing the inertial efficiency J of the first rotator 22 to increase both the natural angular frequency and the damping ratio, and an error in the angle estimation in the first angle estimation unit 32 is reduced.

[Formula 8]

$$\lim_{J \to 0} \frac{n_{12}K}{Js^2 + Cs + K} = \frac{n_{12}K}{Cs + K} \qquad \cdots (8)$$

In order to reduce J, the notch portion 223 is formed in the core 221 (soft magnetic body) of the first rotator 22 to reduce the inertial efficiency of the first rotator 22.

The number of the notch portions 223 is larger at a center (center of the magnetic pole 222) of a spread of the magnetic pole 222 in the circumferential direction and is smaller between the magnetic poles adjacent to each other (intermediate portion of the magnetic poles). That is, the length of the notch portion 223 in the radial direction (the length from the rotation axis O) is set to be longer as the notch portion 223 approaches the center of the magnetic pole 222, and shorter as the notch portion 223 approaches the intermediate portion between the two adjacent magnetic poles 222.

The first rotator 22 is not associated with an external load. The rotator of the synchronous machine is balanced toward an angle in which the magnetic flux is maximized when there is no load. In this case, as shown in Fig. 5, the main component of the magnetic flux is in the radial direction at the center of the magnetic pole, and the number of the components in the circumferential direction is small. Therefore, the magnetic flux is not hindered even if the central portion of the magnetic pole is deeply notched.

Specifically, as shown in Fig. 5, the fact that the number of the notch portions 223 is larger at the center of the magnetic pole 222 and is smaller at the intermediate portion between the magnetic poles is that following Formula (9) is satisfied when the length d of the notch is measured with respect to the angle $\theta_m$ measured from the center of the magnetic pole.

[Formula 9]

$$\int_0^{2\pi} (d(\theta_m) - \mathrm{E}(d(\theta_m)))\cos(p_1\theta_m)\, d\theta_m > 0 \qquad \cdots (9)$$

Here, $\mathrm{E}(d(\theta_m))$ is an average value of d. In a case where there are a plurality of notch holes, d is calculated for each of the notch holes, and a value obtained by summing the calculated values is $\mathrm{E}(d(\theta_m))$.

(Actions and Effects)

As described above, in the variable-speed power device 1 according to the present embodiment, the first rotator 22 includes the notch portion 223 around the rotation axis O.

In this way, the inertial efficiency of the first rotator 22 can be lowered and the damping ratio can be increased. As a result, it is possible to improve the estimation accuracy of the angle of the first rotator 22 in the first angle estimation unit 32.

In the present embodiment, since the angle of the first rotator 22 can be accurately estimated as described above, processing of the interlinked magnetic flux estimation unit 310 may be simplified. Specifically, the interlinked magnetic flux estimation unit 310 may estimate the angle of the interlinked magnetic flux by approximating the electrical angle of the first rotator 22 by the weighted sum of the electrical angle of the second rotator 23 and the electrical angle of the voltage.

In addition, the length of the notch portion 223 in the radial direction is set to be longer as the notch portion 223 approaches the center of the magnetic pole 222.

In this way, the notch portion 223 can be formed without hindering the magnetic flux.

<Fourth Embodiment>

Next, the variable-speed power device 1 according to a fourth embodiment of the present disclosure will be described. In the present embodiment, the output shaft is connected to the second rotator.

The components common to those of the above-described embodiments are denoted by the same reference numerals, and a detailed description thereof is omitted.

(Configuration of First Rotator)

Fig. 6 is a cross-sectional view of a first rotator according to the fourth embodiment of the present disclosure.

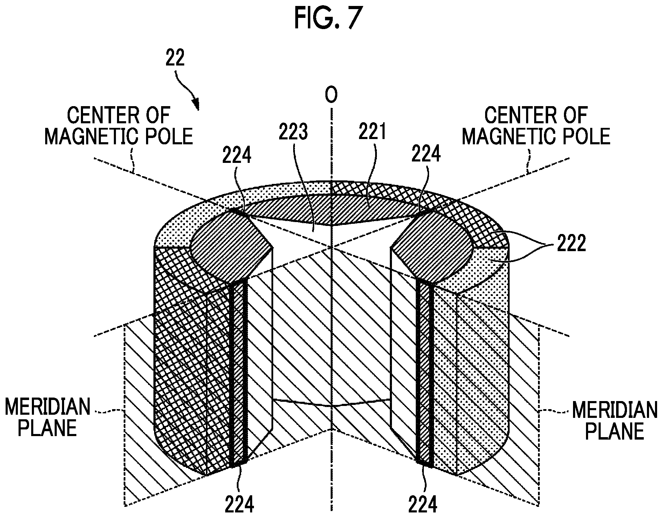

Fig. 7 is a perspective view of a first rotator according to the fourth embodiment of the present disclosure.

As shown in Figs. 6 and 7, the first rotator 22 according to the present embodiment further includes a brake winding 224 wound so as to be interlinked to a magnetic flux penetrating a meridian plane including the center of the magnetic pole 222.

Fig. 7 is an image in which a part of the first rotator 22 in the circumferential direction is cut along the meridian plane. In order to wind the brake winding 224 such that the magnetic flux penetrating the meridian plane including the center of the magnetic pole 222 is interlinked, for example, as shown in Fig. 7, a conductor may be wound on the meridian plane including the center of the magnetic pole. In the example of Fig. 7, the brake winding 224 is wound around the portion of the notch portion 223 that is most deeply notched (inner peripheral surface of the core 221) and the outer peripheral surface of the core 221 in the radial direction.

When a damping coefficient that is additionally generated by the brake winding 224 is represented by $C_d$, the transfer function of the first rotator 22 is represented by following Formula (10).

[Formula 10]

$$\theta_1 = \frac{(C_d s + K)}{J s^2 + (C + C_d)s + K}\left(\beta_1 \frac{2}{p_1}\theta_V + \beta_2 n_{12}\theta_2\right) \quad \cdots (10)$$

In addition, in the present embodiment, since J is reduced by notching as in the third embodiment, the transfer function is approximated by the coefficient $n_{12}$ as in following Formula (11). That is, since the first rotator 22 can follow the angle of the second rotator 23 without being delayed, it is possible to more reliably suppress step-out.

[Formula 11]

$$\lim_{J \to 0, C/C_d \to 0} \frac{n_{12}(C_d s + K)}{J s^2 + (C + C_d)s + K} = \frac{n_{12}(C_d s + K)}{C_d s + K} \quad \cdots (11)$$
$$\approx n_{12}$$

(Actions and Effects)

As described above, in the variable-speed power device 1 according to the present embodiment, the first rotator 22 further includes the brake winding 224 wound so as to be interlinked to the magnetic flux penetrating the medial plane including the center of the magnetic pole 222.

In this way, the variable-speed power device 1 is less likely to step out than in the third embodiment.

<Fifth Embodiment>

Next, the variable-speed power device 1 according to a fifth embodiment of the present disclosure will be described. In the present embodiment, the output shaft is connected to the second rotator.

The components common to those of the above-described embodiments are denoted by the same reference numerals, and a detailed description thereof is omitted.

(Functional Configuration of Variable-Speed Power Device)

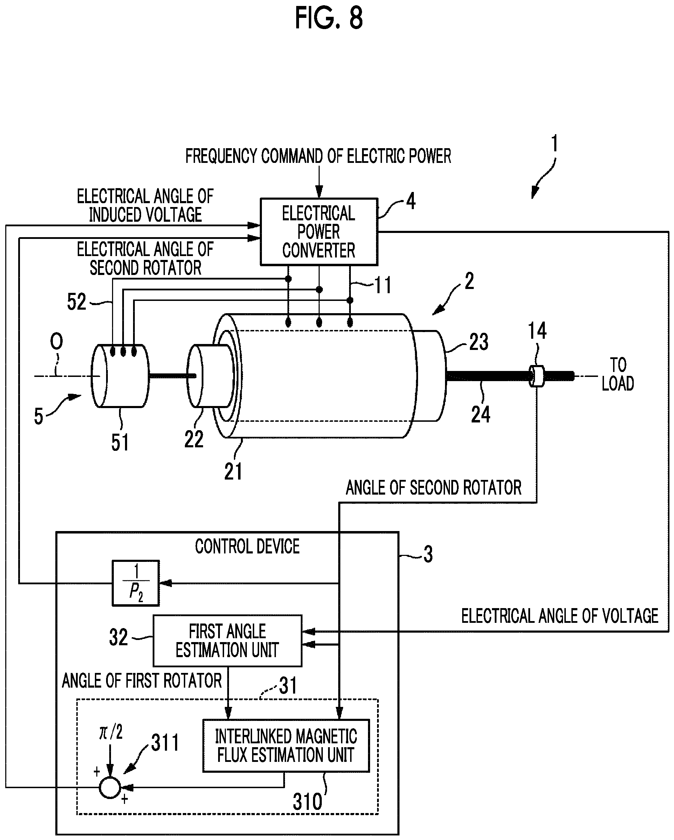

Fig. 8 is a diagram showing a functional configuration of a variable-speed power device according to the fifth embodiment of the present disclosure.

As shown in Fig. 8, the variable-speed power device 1 according to the present embodiment further includes a first electric motor 5 in addition to the configuration according to the second embodiment. The first electric motor 5 includes a rotator 51 (third rotator) and an electric line 52. The first electric motor 5 is, for example, an induction electric motor. The first electric motor 5 is configured to have a synchronous speed equal to that of the synchronous machine 2 or to have a pole number equal to that of the synchronous machine 2.

The rotator 51 of the first electric motor 5 is mechanically connected to the first rotator 22 of the synchronous machine 2.

The electric line 52 is electrically connected in parallel to the armature winding 212 of the synchronous machine 2.

(Operation of First Electric Motor and Electrical Power Converter)

In the third and fourth embodiments, the damping ratio of the motion of the first rotator 22 is improved by the notch portion 223 and the brake winding 224 of the first rotator 22. However, since the first rotator 22 is located inside the synchronous machine 2, the improvement cannot be sufficiently achieved only by the notch portion 223 or the brake winding 224 because of a locational restriction in some cases.

For this reason, in the present embodiment, working of the notch portion 223 and the brake winding 224 according to the third and fourth embodiments are replaced with the first electric motor 5 disposed outside. The first electric motor 5 is connected to the electrical power converter 4, and consumes a part of three-phase alternating current electric power supplied to the synchronous machine 2 by the electrical power converter 4. The first electric motor generates a damping force proportional to a difference between a synchronous speed of the first electric motor 5 determined by a frequency of electric power and a rotation speed of the first electric motor 5 from the nature of an induction machine. Since the first electric motor 5 is connected to the first rotator 22, the generated damping force acts as a damping force also on the first rotator. Therefore, the same effect as that of increasing the damping coefficient C of the first rotator is obtained.

Since the first rotator 22 of the synchronous machine 2 is not connected to an external load, no load is applied. Therefore, the first electric motor 5 is sufficient with being small.

(Effects of Action)

As described above, the variable-speed power device 1 according to the present embodiment further includes the first electric motor 5 that includes the rotator 51 (third rotator) having the same number of poles as the first rotator 22 of the synchronous machine 2 and mechanically connected to the first rotator 22, and the electric line 52 electrically connected in parallel to the armature winding 212 of the synchronous machine 2.

In this way, the accuracy of the first angle estimation unit 32 is improved. As a result, the variable-speed power device 1 can follow a more rapid load change, and a range in which the step-out can be avoided can be expanded. That is, it is possible to further firmly suppress step-out.

<Sixth Embodiment>

Next, the variable-speed power device 1 according to a sixth embodiment of the present disclosure will be described. In the present embodiment, the output shaft is connected to the second rotator.

The components common to those of the above-described embodiments are denoted by the same reference numerals, and a detailed description thereof is omitted.

(Functional Configuration of Variable-Speed Power Device)

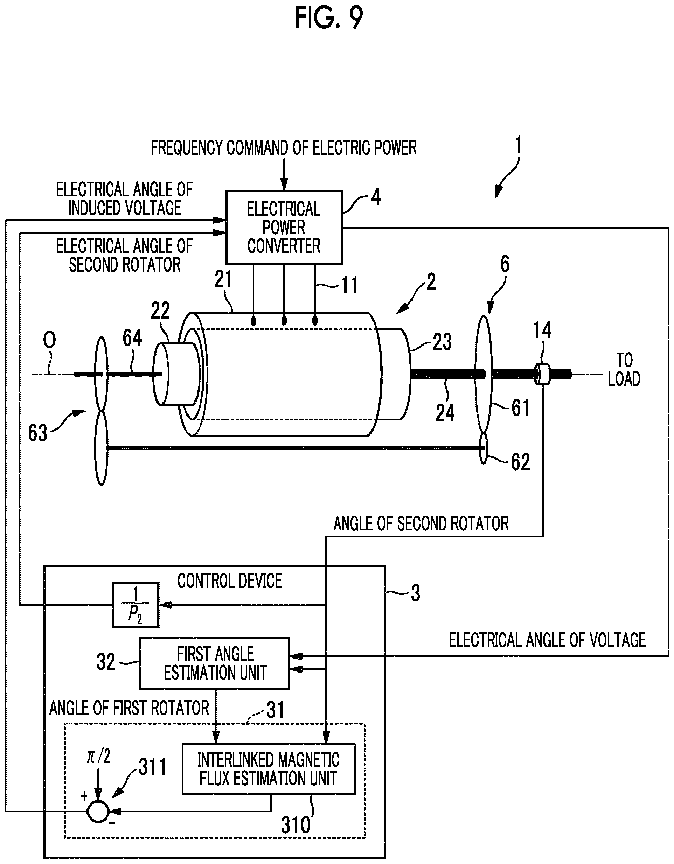

Fig. 9 is a diagram showing a functional configuration of a variable-speed power device according to the sixth embodiment of the present disclosure.

As shown in Fig. 9, the variable-speed power device 1 according to the present embodiment further includes a speed reducer 6 in addition to the configuration according to the second embodiment.

The speed reducer 6 has a coupling 63 that connects the first rotator 22 and the second rotator 23 of the synchronous machine 2. The coupling 63 is an elastic coupling or a viscous coupling. In addition, the speed reducer 6 includes a first gear 61 and a second gear 62. The first gear 61 is connected to the output shaft 24 of the synchronous machine 2. Therefore, the first gear 61 rotates at the same speed as the second rotator 23. The second gear 62 further transmits the power of the second rotator 23 of the synchronous machine 2 transmitted from the first gear 61 to the coupling 63. The coupling 63 is connected to the first rotator 22 via a shaft 64. Accordingly, the angle of the first rotator 22 follows the angle of the second rotator 23. When a speed ratio of the speed reducer 6 is made equal to a speed ratio of the first rotator and the second rotator, the speed reducer is driven with no load on a regular basis. Then, the damping force corresponding to a speed difference is generated by working of a viscoelastic coupling only when a transient speed difference occurs between the two. This has the same effect as the damping coefficient C of the first rotator 22 being increased. Accordingly, it is possible to suppress the first rotator 22 from vibrating with respect to the second rotator 23. Accordingly, in the first angle estimation unit 32, the accuracy of estimating the angle of the first rotator 22 can be improved.

In Fig. 9, an example in which each of the components of the speed reducer 6 (the first gear 61, the second gear 62, the coupling 63, and the shaft 64 connecting the coupling 63 and the first rotator 22) is disposed outside the synchronous machine 2 is shown, but the present disclosure is not limited thereto. In another embodiment, the speed reducer 6 may be configured to include, for example, a planetary gear or the like and may be disposed inside the synchronous machine 2.

(Effects of Action)

As described above, the variable-speed power device 1 according to the present embodiment further includes the speed reducer 6 connected to the synchronous machine. The speed reducer 6 includes the coupling 63 that connects the first rotator 22 of the synchronous machine 2 and the second rotator.

In this way, the variable-speed power device 1 can suppress the first rotator 22 of the synchronous machine 2 from irregularly vibrating with respect to the second rotator 23. Accordingly, in the first angle estimation unit 32, the accuracy of estimating the angle of the first rotator 22 can be improved.

<Seventh Embodiment>

Next, the variable-speed power device 1 according to a seventh embodiment of the present disclosure will be described. In the present embodiment, the output shaft is connected to the second rotator.

The components common to those of the above-described embodiments are denoted by the same reference numerals, and a detailed description thereof is omitted.

(Functional Configuration of Variable-Speed Power Device)

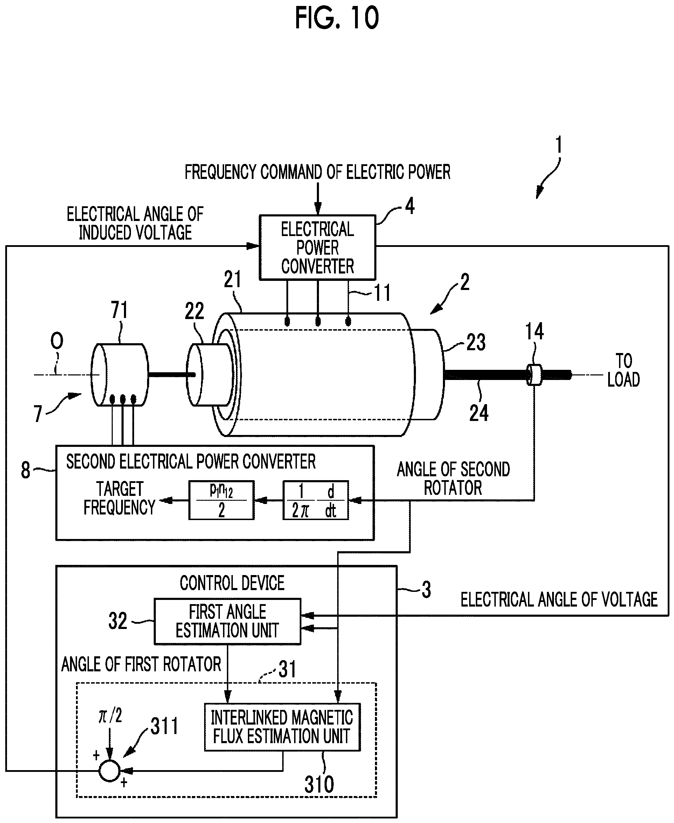

Fig. 10 is a diagram showing a functional configuration of a variable-speed power device according to the seventh embodiment of the present disclosure.

As shown in Fig. 10, the variable-speed power device 1 according to the present embodiment further includes a second electric motor 7 and a second electrical power converter 8 in addition to the configuration according to the second embodiment.

The second electric motor 7 includes a rotator 71 (fourth rotator). The rotator 71 is mechanically connected to the first rotator 22 of the synchronous machine 2. As in the first electric motor 5 of the fifth embodiment, the second electric motor 7 is, for example, a small induction electric motor or a small synchronous electric motor.

The second electrical power converter 8 supplies electric power to the second electric motor 7 such that the rotation speed of the second rotator 23 coincides with the rotation speed of the first rotator of the synchronous machine 2 by adjusting the frequency of electric power for driving the second electric motor 7. Further, the second electrical power converter 8 may supply electric power to the second electric motor 7 to assist the synchronous machine 2.

(Operation of Second Electric Motor and Second Electrical Power Converter)

As shown in Fig. 10, the second electric motor 7 is connected to the first rotator 22 of the synchronous machine 2. The second electric motor 7 is supplied with electric power by the second electrical power converter 8. The second electrical power converter 8 generates a target frequency of the second electrical power converter 8 such that the rotation speed [rps] of the second rotator 23 obtained from a time differential value of the angle of the second rotator 23 of the synchronous machine 2 is multiplied by $p_1 n_{12}/2$, and the rotation speed of the second rotator 23 is a synchronous rotation speed of the first rotator 22. The second electrical power converter 8 adjusts the frequency or the phase of the electric power for driving the second electric motor 7 such that the rotation speed of the first rotator 22 coincides with the synchronous rotation speed. Further, the second electrical power converter 8 may additionally advance the phase of the voltage of the electric power for driving the second electric motor 7 to assist the synchronous machine 2.

(Effects of Action)

As described above, the variable-speed power device 1 according to the present embodiment further includes the second electric motor 7 that is mechanically connected to the first rotator 22 of the synchronous machine 2, and the second electrical power converter 8 that adjusts the frequency of the electric power for driving the second electric motor 7 to coincide with the speed of the second rotator 23 of the synchronous machine 2. In a case where the second electric motor 7 and the first rotator 22 relatively move with respect to the second rotator 23, the electric power supplied to the second electric motor 7 by the second electrical power converter 8 acts as a damping force, and the relative movement is restricted. Further, if the synchronous machine 2 is assisted by the second electrical power converter 8 and the second electric motor 7, driving capacity of the load is improved.

In this way, the variable-speed power device 1 can suppress the first rotator 22 of the synchronous machine 2 from irregularly vibrating with respect to the second rotator 23. Accordingly, in the first angle estimation unit 32, the accuracy of estimating the angle of the first rotator 22 can be improved. As a result, the variable-speed power device 1 can follow a more rapid load change, and a range in which the step-out can be avoided can be expanded. That is, it is possible to further firmly suppress step-out.

<Eighth Embodiment>

Next, the variable-speed power device 1 according to an eighth embodiment of the present disclosure will be described.

The components common to those of the above-described embodiments are denoted by the same reference numerals, and a detailed description thereof is omitted.

(Functional Configuration of Variable-Speed Power Device)

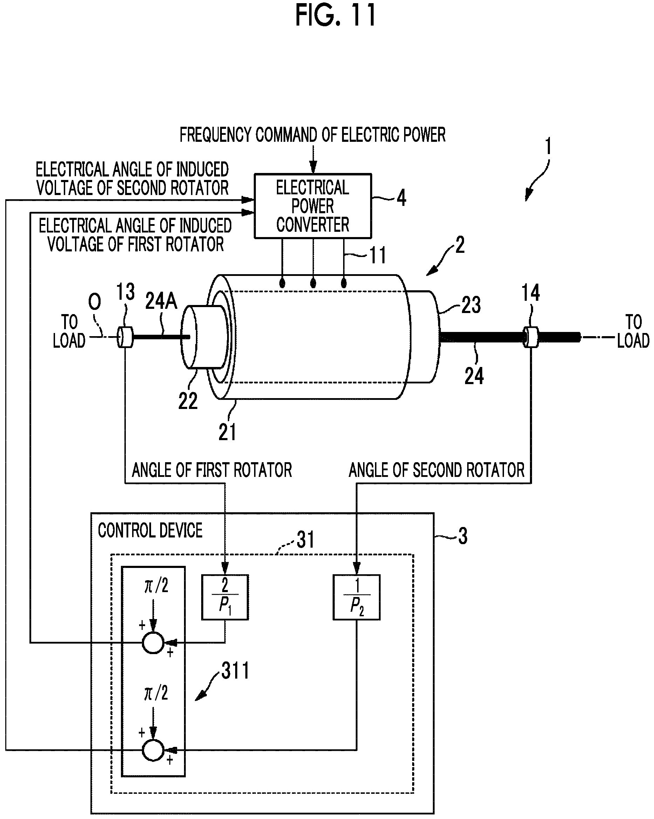

Fig. 11 is a diagram showing a functional configuration of a variable-speed power device according to the eighth embodiment of the present disclosure.

As shown in Fig. 11, the variable-speed power device 1 according to the present embodiment does not include the interlinked magnetic flux estimation unit 310. The interlinked magnetic flux estimation unit 310 performs vector control by the electrical power converter 4, based on the electrical angle of the induced voltage by the first rotator 22 and the second rotator 23. In the present embodiment, the V/f control is used instead of the vector control in the electrical power converter 4, so that it is not necessary to estimate the electrical angle of the induced voltage. It is known that the rotation speed of the synchronous machine follows the synchronous speed of the frequency of the driving electric power with a time delay, and is eventually stabilized to the synchronous speed. The magnetic-geared motor of the present application also belongs to the synchronous machine, and thus has the same property.

Therefore, if a change in the frequency of the driving electric power is not sudden in time, since the rotation of the magnetic-geared motor follows the synchronous speed determined by the frequency of the driving electric power although the following is delayed, the speed adjustment can be relatively easily achieved by the frequency of the driving electric power. However, if the frequency of the driving electric power is suddenly changed over time, the rotation following delay is maximized, step-out occurs, and the intended function of the synchronous machine is lost.

Since the magnetic-geared motor includes the first rotator and the second rotator, there is a possibility of step-out in each of the first rotator and the second rotator. The step-out occurs if offsets of the electrical angle of the voltage of the driving electric power and the electrical angle of the rotator exceeds $\pm 90°$. Therefore, the offsets of the respective rotators are compared with each other, and the voltage of the driving electric power is adjusted such that the offset of the rotator having the larger offset does not exceed $\pm 90°$, thereby step-out is avoided. The first angle sensor 13 measures the angle of the first rotator 22. The induced voltage angle estimation unit 31 obtains the electrical angle of the first rotator by dividing a value measured by the first angle sensor 13 by 1/2 of the number of poles $p_1$ of the first rotator. Similarly, the induced voltage angle estimation unit 31 obtains the electrical angle of the second rotator by dividing a value measured by the second angle sensor 14 by the number of poles $p_2$ of the second rotator.

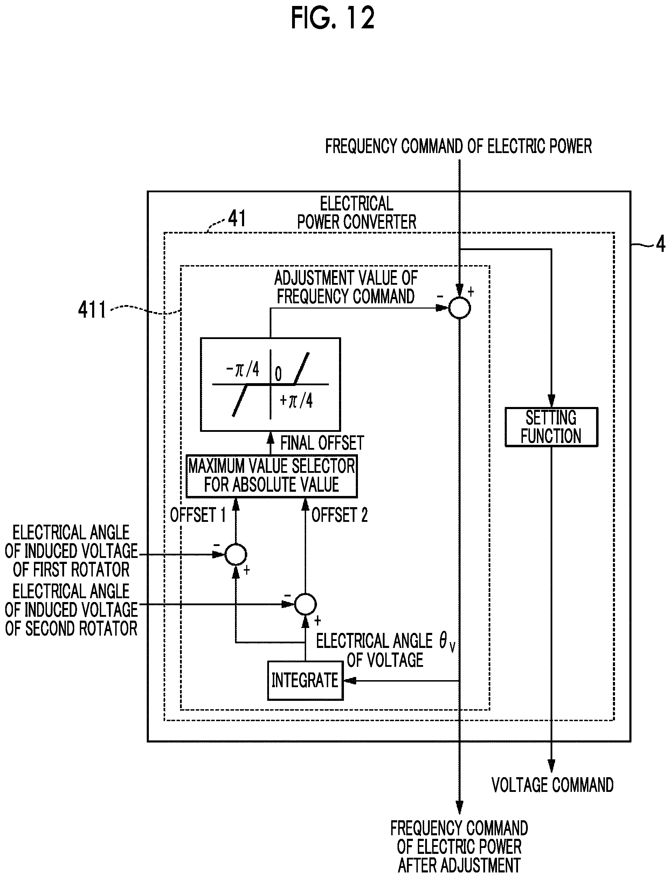

A detailed description will be made with reference to Fig. 12. The electrical power converter 4 inputs the electrical angle of the induced voltage of the first rotator 22 and the electrical angle of the induced voltage of the second rotator 23, and calculates an offset 1 and an offset 2 with respect to the electrical angles of the voltages, respectively. The offset 1 and the offset 2 are compared with each other, a value having a larger absolute value is determined as a final offset, and the

electrical angle $\theta_V$ of the voltage of the electric power for driving the synchronous machine 2 is adjusted based on the final offset to avoid step-out of the synchronous machine 2. In the adjustment, for example, as shown in Fig. 12, an adjustment value of the frequency command is zero if the final offset is within a predetermined allowable range (for example, a range of [-30°, +30°]) in a load adjuster 411 of a calculation function unit 41 inside the electrical power converter 4. When the final offset exceeds the allowable range, adjustment is performed by adding a value proportional to the final offset to the frequency command as an adjustment value such that the absolute value of the final offset is reduced.

The command of the voltage of the electric power is determined, for example, from a setting function set in advance based on the frequency command of the electric power.

(Effects of Action)

As described above, in the variable-speed power device 1 according to the present embodiment, the electrical power converter 4 performs the V/f control based on the electrical angle of the voltage having the larger absolute value of the offset with respect to the electrical angle of the voltage among the electrical angle of the first rotator 22 and the electrical angle of the second rotator 23, and adjusts the frequency of the electric power for driving the synchronous machine 2.

Since the variable-speed power device 1 according to the present embodiment is different from the one that performs the vector control according to, for example, the first embodiment, and does not need to estimate the angle of a combined magnetic flux by the first rotator and the second rotator, the processing of the interlinked magnetic flux estimation unit 310 can be omitted. In a use in which a gentle response is required, it is possible to suppress step-out with simpler processing by adopting the variable-speed power device 1 according to the present embodiment. A feature of the present embodiment is that the driving electric power is particularly adjusted in frequency based on the electrical angle of the induced voltage of the rotator closer to step-out among the first rotator 22 and the second rotator 23. In another embodiment, a configuration may be adopted in which vector controller based on the electrical angle of the induced voltage of the first rotator 22 and vector controller based on the electrical angle of the induced voltage of the second rotator 23 are provided, and vector control is performed using the vector controller of the rotator closer to step-out.

<Ninth Embodiment>

Next, the variable-speed power device 1 according to a ninth embodiment of the present disclosure will be described.

The components common to those of the above-described embodiments are denoted by the same reference numerals, and a detailed description thereof is omitted.

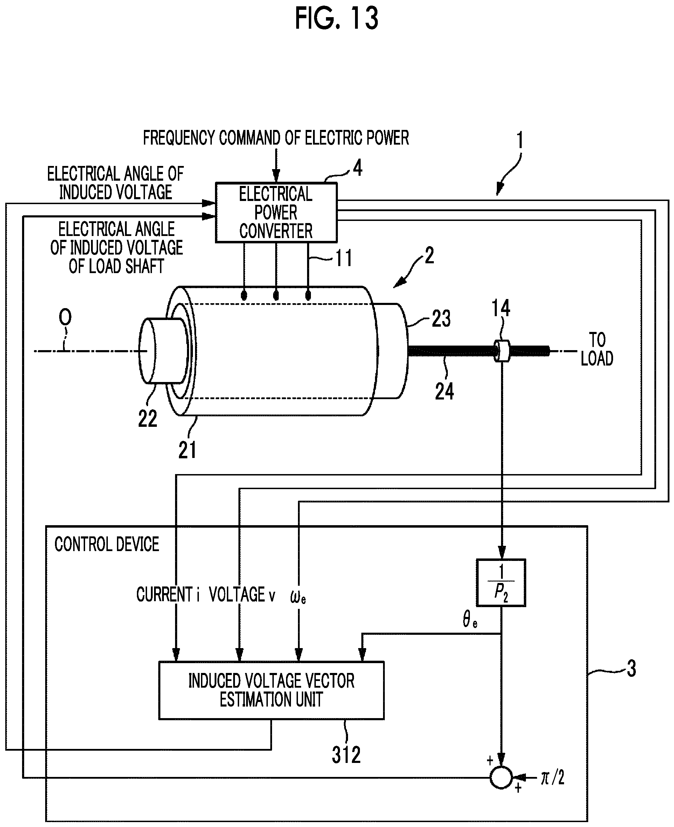

Fig. 13 is a diagram showing a functional configuration of a variable-speed power device according to the ninth embodiment of the present disclosure.

As shown in Fig. 13, the control device 3 according to the present embodiment includes an induced voltage vector estimation unit 312.

The induced voltage vector estimation unit 312 estimates the angle of the induced voltage vector based on the voltage and the current of the electric power line 11 that drives the synchronous machine 2, and outputs the electrical angle of the induced voltage. The calculated electrical angle of the induced voltage is output to the electrical power converter 4.

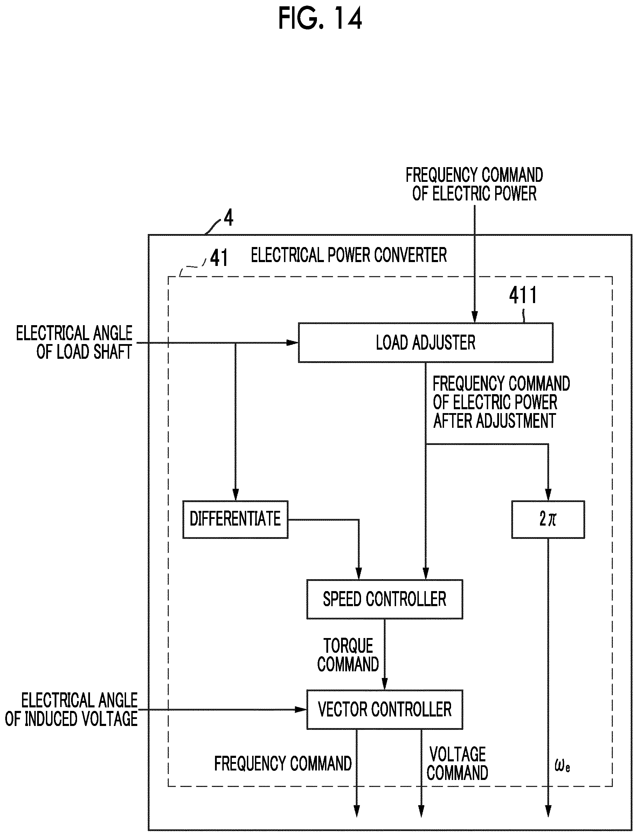

Fig. 14 is a diagram showing a functional configuration of an electrical power converter according to the ninth embodiment.

As shown in Fig. 14, the electrical power converter 4 according to the present embodiment includes the load adjuster 411 in addition to the vector controller in the calculation function unit 41. The specific configuration of the load adjuster 411 is the same as that of the eighth embodiment.

In the load adjuster 411, the calculation function unit 41 adjusts the frequency of the electric power based on the offset of the electrical angle $\theta_V$ of the voltage and the angle (second angle) measured by the second angle sensor 14 provided in the load shaft (in the present embodiment, the second rotator 23), and prevents step-out of the load shaft.

(Operation of Control Device)

Next, an operation of the control device 3 according to the present embodiment will be described in detail. The induced voltage vector estimation unit 312 estimates the induced voltage vector generated in the armature from a voltage vector and a current vector and impedance of the armature. The current vector and the voltage vector are calculated from an electrical angle $\theta_e$ of the second rotator by using Formulae (12) and (13), respectively.

[Formula 12]

$$\dot{I} = \frac{1}{\pi} \int_0^{2\pi} i \cos\theta_e \, d\theta_e + j \cdot \frac{1}{\pi} \int_0^{2\pi} i \sin\theta_e \, d\theta_e \qquad \cdots (1\,2)$$

[Formula 13]

$$\dot{V} = \frac{1}{\pi} \int_0^{2\pi} v \cos\theta_e \, d\theta_e + j \cdot \frac{1}{\pi} \int_0^{2\pi} v \sin\theta_e \, d\theta_e \qquad \cdots (1\,3)$$

Here, i is a phase current of the alternating current supplied to the synchronous machine 2, and v is a phase voltage of the alternating current supplied to the synchronous machine 2. The symbol "·" represents a complex number. j is an imaginary unit.

The synchronous machine 2 is generally driven by three-phase alternating current. When there is a difference between the three phases, the voltage vector and the current vector are calculated by using Formulae (14) and (15), respectively. The three phases are a U phase, a V phase, and a W phase, and an electrical angle of the V phase and an electrical angle of the W phase are obtained by subtracting 120° (2n/3) and 240° (4π/3) from an electrical angle of the U phase at the same time, respectively. Considering such a difference between the phases is also included in the scope of the present embodiment.

[Formula 14]

$$\dot{I} = \frac{1}{3} \sum_{k \in \{U,V,W\}} \frac{1}{\pi} \int_0^{2\pi} i_k \cos\theta_{e,k} \, d\theta_{e,k} + j \cdot \frac{1}{\pi} \int_0^{2\pi} i_k \sin\theta_{e,k} \, d\theta_{e,k}$$

$$\cdots (1\,4)$$

[Formula 15]

$$\dot{V} = \frac{1}{3} \sum_{k \in \{U,V,W\}} \frac{1}{\pi} \int_0^{2\pi} v_k \cos\theta_{e,k} \, d\theta_{e,k} + j \cdot \frac{1}{\pi} \int_0^{2\pi} v_k \sin\theta_{e,k} \, d\theta_{e,k}$$

$$\cdots (1\,5)$$

Alternatively, the voltage vector and the current vector may be calculated from the instantaneous value by using following Formulae (16) and (17).

[Formula 16]

$$\dot{I} = \frac{1}{3} \sum_{k \in \{U,V,W\}} i_k \cos\theta_{e,k} + j \cdot i_k \sin\theta_{e,k} \qquad \cdots (1\,6)$$

[Formula 17]

$$\dot{V} = \frac{1}{3} \sum_{k \in \{U,V,W\}} v_k \cos\theta_{e,k} + j \cdot v_k \sin\theta_{e,k} \qquad \cdots (1\,7)$$

When the impedance of the armature is Z^· ("·" is added to an upper part of Z. The same applies hereinafter.), an induced voltage vector E^· can be calculated from a voltage vector V^· and a current vector I^· by the following Formula (18).

[Formula 18]

$$\dot{E} = \dot{V} - \dot{Z}\dot{I} \qquad \cdots (1\,8)$$

Here, the impedance is calculated from a resistance R and inductance L by following Formula (19). Values of R and L are determined in advance. $\omega_e$ is, for example, an angular frequency of the frequency command after the adjustment. In addition, as $\omega_e$, the electrical angular frequency of the first rotator 22, the electrical angular frequency of the second rotator 23, and the electrical angular frequency of the induced voltage may be used.

[Formula 19]

$$\dot{Z} = R + j\omega_e L$$
$$\approx j\omega_e L \qquad \cdots (19)$$

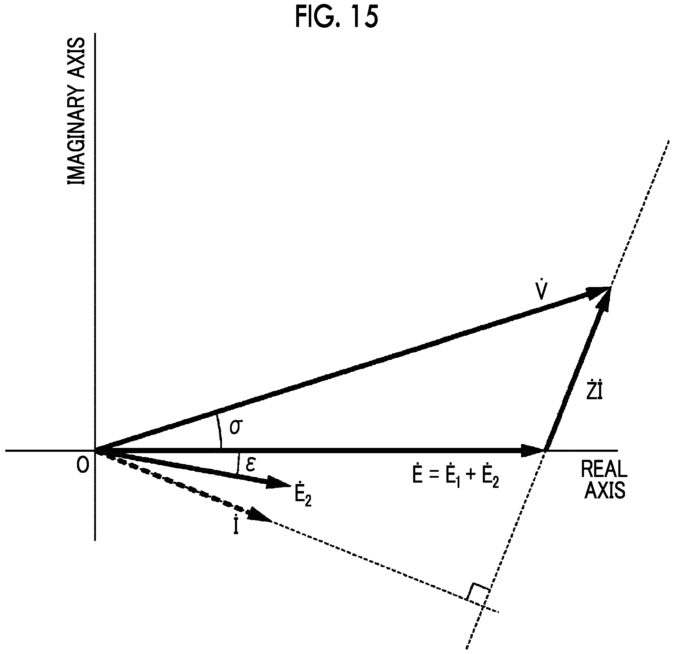

Fig. 15 is a diagram showing an example of an induced voltage vector according to the eighth embodiment of the present disclosure, and represents a load driving state.

Fig. 15 shows a state where the angle of the induced voltage vector is offset with respect to the electrical angle of the second rotator 23 because of the influence of the first rotator 22. Fig. 15 shows an electrical angle of an induced voltage vector $E^{\wedge\cdot}$, which is a sum of an induced voltage vector $E_1^{\wedge\cdot}$ of the first rotator 22 and an induced voltage vector $E_2^{\wedge\cdot}$ of the second rotator 23, as a real axis, $\delta$ is an angle formed by the voltage vector $V^{\wedge\cdot}$ and the induced voltage vector $E^{\wedge\cdot}$, and is a value called a load angle. $\varepsilon$ is an angle formed by the induced voltage $E^{\wedge\cdot}$ and the induced voltage of the second rotator 23.

In the load driving state, the angle of the induced voltage $E^{\wedge\cdot}$ of the magnetic-geared motor is generally not determined only by the angle of the first rotator or only by the angle of the second rotator. In order to perform the vector control, the angle of the induced voltage is required, and in the first embodiment of the present application, the angle of the first rotator is measured, the angle of the second rotator is measured, and the electrical angle of the induced voltage $E^{\wedge\cdot}$ is estimated. In the first embodiment, it is necessary to measure an angle of a rotator. In contrast, in the present embodiment, the electrical angle of the induced voltage $E^{\wedge\cdot}$ is obtained from measured values of the voltage vector $V^{\wedge\cdot}$ and the current vector $I^{\wedge\cdot}$, based on Formula (18). The present example is characterized in that an angle sensor is not required.

As described in the eighth embodiment, when an offset $\delta+\varepsilon$ of the load shaft, for example, the second rotator, with respect to the voltage vector $V^{\wedge}$, exceeds the range of $\pm90°$ ($\pm\pi/2$), the load shaft steps out. The vector control is for adjusting the electric power supplied to the magnetic-geared motor, and the distribution to the first rotator or the second rotator cannot be dynamically adjusted. Therefore, as shown in Fig. 14, the electrical power converter 4 adjusts the frequency command such that the offset $\delta+\varepsilon$ of the load shaft is within a predetermined allowable range such as $\pm45°$, for example, by adding the load adjuster 411 described in the eighth embodiment.

The load adjuster 411 inputs a frequency command and outputs the frequency command after adjustment. The speed controller outputs a torque command by, for example, proportional integral control such that the electrical angular frequency of the load shaft coincides with the frequency command after adjustment. The torque command referred to herein is torque of an imaginary rotation axis rotating at an angular frequency of an induced voltage. The vector controller adjusts the frequency command and the voltage command based on the electrical angle of the induced voltage to quickly stabilize the magnetic-geared motor. In a stabilization state, the electric power supplied by the electrical power converter 4 is consumed by the load shaft except for the loss.

(Effects of Action)

As described above, in the variable-speed power device 1 according to the present embodiment, the induced voltage vector estimation unit 312 estimates the induced voltage vector based on the voltage and the current for driving the synchronous machine 2, and outputs the electrical angle of the induced voltage.

Accordingly, the vector control can be performed in the variable-speed power device 1 even when an angle calculator of a rotator is not provided.

<Tenth Embodiment>

Next, the variable-speed power device 1 according to a tenth embodiment of the present disclosure will be described.

The components common to those of the above-described embodiments are denoted by the same reference numerals, and a detailed description thereof is omitted.

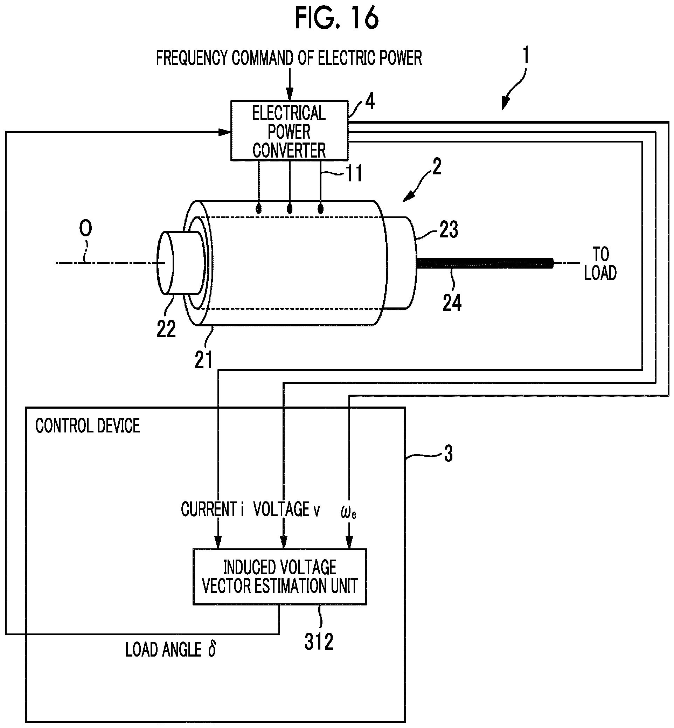

Fig. 16 is a diagram showing a functional configuration of a variable-speed power device according to the tenth embodiment of the present disclosure.

As shown in Fig. 16, the induced voltage vector estimation unit 312 according to the present embodiment estimates the load angle $\delta$ based on the voltage, the current, and the electrical angular frequency of the voltage of the electric power for driving the synchronous machine 2. In the present embodiment, the second angle sensor 14 of the second rotator 23 is not required.

(Operation of Control Device and Electrical Power Converter)

In the ninth embodiment, the second angle sensor 14 for measuring the angle of the second rotator 23 is required, and a cost of the sensor or the wiring is required. On the other hand, the present embodiment does not require a cost for a sensor for measuring an angle or a cost for a wiring. Specifically, in the present embodiment, the current vector and the induced voltage vector are calculated with reference to the voltage vector.

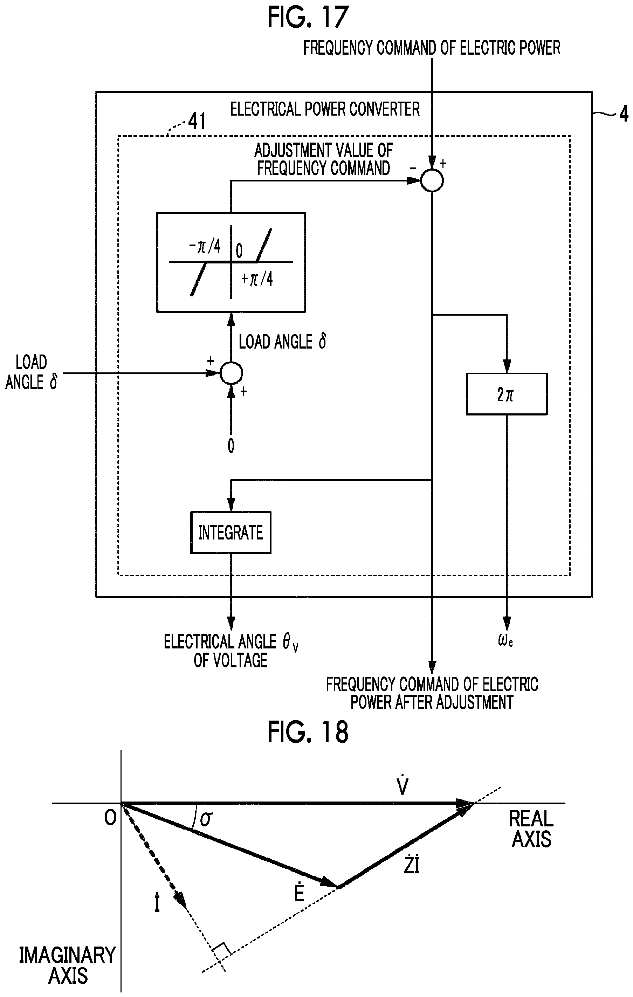

Fig. 17 is a diagram for describing an example of an operation of an electrical power converter according to the tenth embodiment of the present disclosure.

The electrical power converter 4 outputs a voltage such that the voltage coincides with the electrical angle command of the voltage inside the electrical power converter 4. Therefore, as the electrical angle of the voltage, the electrical angle command $\theta_V$ of the voltage is used as it is. Assuming that an amplitude of the voltage follows the command value |V| inside the electrical power converter 4 and the real axis is taken as $\theta_V$, the voltage vector is represented by following Formula (21).

[Formula 21]

$$\dot{V} = |V| + j \cdot 0 \qquad \cdots (2\,1)$$

When the electrical angle $\theta_V$ of the voltage vector is used as a reference angle, the current vector is represented by following Formula (22).

[Formula 22]

$$\dot{I} = \frac{1}{\pi} \int_0^{2\pi} i \cos\theta_V \, d\theta_V + j\frac{1}{\pi} \int_0^{2\pi} i \sin\theta_V \, d\theta_V \qquad \cdots (2\,2)$$

Fig. 18 is a diagram showing an example of a load angle according to the tenth embodiment of the present disclosure.

As in the eighth embodiment, the induced voltage vector E^· can be calculated from the voltage vector V^· and the current vector I^· by using the above-described Formula (18). The electrical angular frequency $\omega_e$ of the voltage V is used in the calculation of the impedance in Formula (19). In the present embodiment, the electrical angle of the induced voltage vector is the load angle $\delta$, as shown in Fig. 18, since the electrical angle is represented with reference to the voltage vector. Therefore, as shown in Fig. 17, the electrical power converter 4 calculates a correction value of the frequency command value using the electrical angle (load angle $\delta$) of the induced voltage vector input from the control device 3, instead of calculating the load angle $\delta$ in the calculation function unit 41.

(Effects of Action)

As described above, in the variable-speed power device 1 according to the present embodiment, the induced voltage vector estimation unit 312 estimates the load angle $\delta$ based on the voltage, the current, and the electrical angular frequency of the voltage of the electric power for driving the synchronous machine 2.

In this way, the variable-speed power device 1 can avoid need for measuring the first angle of the first rotator 22. In this manner, a cost of the first angle sensor 13 or the wiring can be reduced.

<Eleventh Embodiment>

Next, the variable-speed power device 1 according to an eleventh embodiment of the present disclosure will be described.

The components common to those of the above-described embodiments are denoted by the same reference numerals, and a detailed description thereof is omitted.

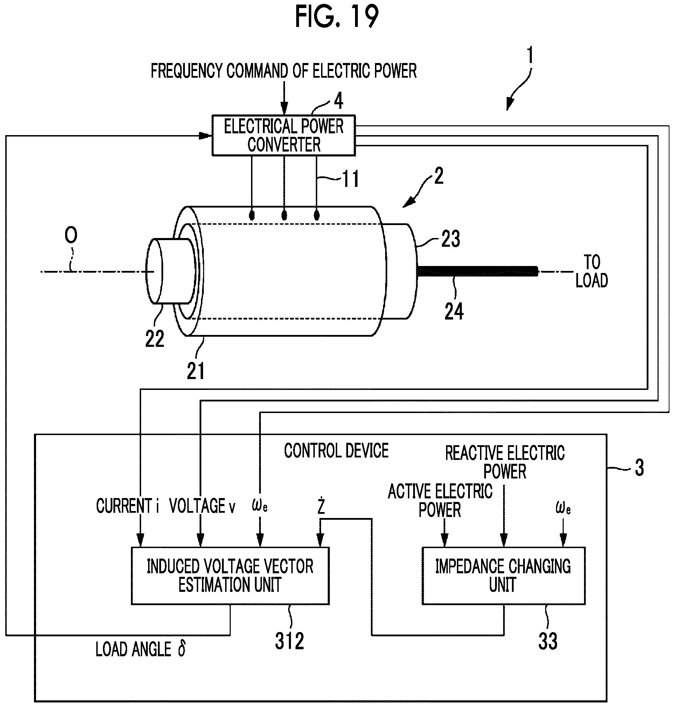

Fig. 19 is a diagram showing a functional configuration of a variable-speed power device according to the eleventh embodiment of the present disclosure.

As shown in Fig. 19, the control device 3 according to the present embodiment further includes an impedance changing unit 33. It should be noted that Fig. 19 illustrates an aspect in which the impedance changing unit 33 is added to the configuration of the tenth embodiment (Fig. 16), but the present disclosure is not limited thereto. In another embodiment, an aspect in which the impedance changing unit 33 is added to the configuration of the ninth embodiment (Fig. 13) may be adopted.

The impedance changing unit 33 changes a value of the impedance of the armature based on active electric power, the reactive electric power, and the electrical angular frequency $\omega_e$ of the voltage of the synchronous machine 2. The electrical angular frequency is not limited to the voltage. For example, in the stabilization state, the electrical angular frequencies of the current, the first rotator, and the second rotator coincide with the electrical angular frequency of the voltage. The electrical angular frequency of the voltage may be replaced with these electrical angular frequencies.

In addition, the induced voltage vector estimation unit 312 according to the present embodiment estimates the induced voltage vector based on the current for driving the synchronous machine 2, the electrical angle of the voltage, and the changed value of the impedance.

(Operation of Control Device)

The impedance of the armature is used for estimating the induced voltage vector. The impedance is not a constant value, and varies depending on the motion of the first rotator 22 and the second rotator 23 or the ease of passage (permeance) of the magnetic flux of the magnetic circuit inside the synchronous machine 2 by magnetic saturation. In the present embodiment, the value of the impedance is changed according to the active electric power, the reactive electric power, and the rotation speed of the synchronous machine 2.

An initial value of the impedance is set in a preliminary test or the like. The electrical angular frequency of the voltage V may be replaced with the electrical angular frequency of the second rotator.

Active electric power P is electric power that is power for driving a load, and is calculated from the voltage vector $\dot{V}$ and the current vector $\dot{I}$ by following Formula (23).

[Formula 23]

$$P = \mathrm{Re}\left(\dot{V}\dot{I}^*\right) \quad \cdots (23)$$

Here, the symbol * represents a complex conjugate, and Re represents a real part of the complex number.

Reactive electric power Q is electric power that is mainly stored as magnetic energy, not for driving a load, and is calculated by following Formula (24).

[Formula 24]

$$Q = \mathrm{Im}\left(\dot{V}\dot{I}^*\right) \quad \cdots (24)$$

In Formula (24), Im represents an imaginary part of the complex number.

(Effects of Action)

As described above, the variable-speed power device 1 according to the present embodiment further includes the impedance changing unit 33 that changes the value of the impedance based on the active electric power, the reactive electric power, and the electrical angular frequency of the voltage of the synchronous machine 2. In addition, the induced voltage vector estimation unit 312 estimates the induced voltage vector based on the current for driving the synchronous machine 2, the electrical angle of the voltage, and the changed value of the impedance.

In this way, since the variable-speed power device 1 can reflect the change of the impedance in the calculation of the induced voltage vector, the induced voltage vector can be more accurately estimated.

<Twelfth Embodiment>

Next, the variable-speed power device 1 according to a twelfth embodiment of the present disclosure will be described.

The components common to those of the above-described embodiments are denoted by the same reference numerals, and a detailed description thereof is omitted.

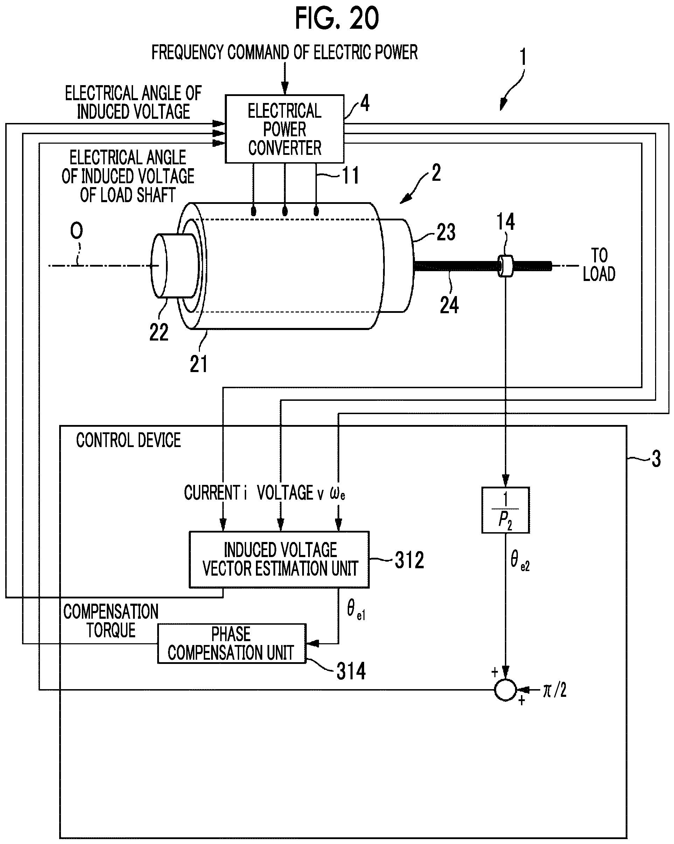

Fig. 20 is a diagram showing a functional configuration of a variable-speed power device according to the twelfth embodiment of the present disclosure.

The control device 3 according to the present embodiment is obtained by improving the control device 3 according to the ninth embodiment. Specifically, as shown in Fig. 20, the control device 3 according to the present embodiment further includes a phase compensation unit 314 in addition to the induced voltage vector estimation unit 312.

The phase compensation unit 314 (phase compensator) generates a phase compensation signal for performing phase compensation of inertia of the first rotator 22 based on the electrical angle of the second rotator 23.

In addition, the induced voltage vector estimation unit 312 according to the present embodiment estimates the

electrical angle $\theta_{e1}$ of the first rotator 22 in addition to the electrical angle of the induced voltage, based on the voltage, the current, and the electrical angular frequency of the voltage of the electric power for driving the synchronous machine 2.

(Operation of Control Device)

The magnetic-geared motor includes the first rotator 22 and the second rotator 23. The armature is common to the two rotators. For this reason, for example, even when power is to be supplied from the armature to the second rotator 23, a part of the power excites the motion of the first rotator 22, and the first rotator 22 vibrates. The present embodiment aims to suppress the vibration of the first rotator 22 by applying a damping force to the first rotator 22.

The induced voltage vector $E_1^\wedge{\cdot}$ of the first rotator 22 coincides with the voltage vector $V^\wedge{\cdot}$ in the stabilization state. However, in a transient state, the first rotator 22 also uses power to accelerate or decelerate its own inertia, so that the two do not coincide with each other. Therefore, the induced voltage vector $E_1^\wedge{\cdot}$ of the first rotator 22 is estimated from Formula (25).

[Formula 25]

$$\dot{E}_1 = \dot{E} - \dot{E}_2 \qquad \cdots (2\,5)$$

It is assumed that the induced voltage vector $E_2^\wedge{\cdot}$ of the second rotator 23 is acquired by testing the magnitude $A_{E2}$ in advance. When the angle $\theta_V$ of the voltage vector, the angle $\theta_I$ of the current vector, and the measured value of the electrical angle $\theta_{e2}$ of the second rotator 23 are used, the induced voltage vector of the first rotator 22 can be represented by Formula (26).

[Formula 2 6]

$$\dot{E}_1 = \left|\dot{V}\right|(\sin\theta_V + j\cos\theta_V) - \left|\dot{i}\right|\left|\dot{Z}\right|(j\sin\theta_I - \cos\theta_I) \\ - A_{E2}(\sin\theta_{e2} + j\cos\theta_{e2})$$
$$\cdots (2\,6)$$

Therefore, the angle of the induced voltage vector, that is, the electrical angle $\theta_{e1}$ of the first rotator 22 is obtained by using Formula (27).

[Formula 27]

$$\theta_{e1} = \operatorname{atan}\frac{\operatorname{Im}(\dot{E}_1)}{\operatorname{Re}(\dot{E}_1)} \qquad \cdots (2\,7)$$

The phase compensation unit 314 calculates and outputs compensation torque based on the electrical angle $\theta_{e1}$ of the first rotator 22. Compensation torque $T_D$ is generated in proportion to the speed of the first rotator 22, for example, as in Formula (28). kD and $\tau$D are adjustment constants. s is a Laplace operator.

[Formula 28]

$$T_D = \frac{k_D s}{\tau_D s + 1}\theta_{e1} \qquad \cdots (2\,8)$$

(Operation of Electrical Power Converter)

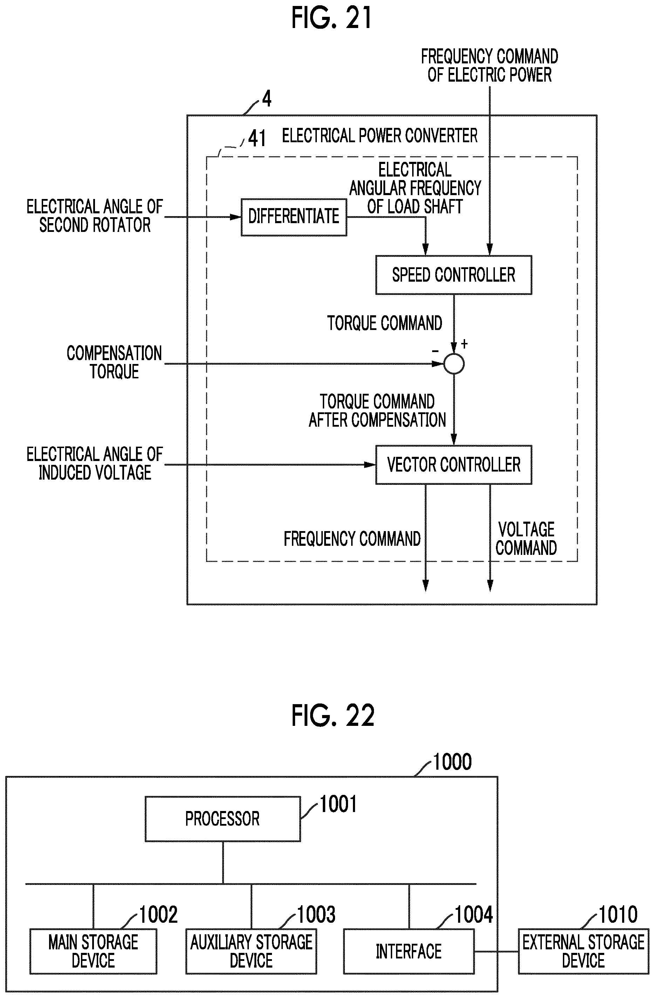

Fig. 21 is a diagram showing a functional configuration of an electrical power converter according to the twelfth embodiment of the present disclosure.

As shown in Fig. 21, the electrical power converter 4 inputs the compensation torque, and in the calculation function unit 41, the electrical power converter 4 calculates a torque command after compensation by subtracting a torque compensation signal from the torque command output by the speed controller. The vector controller adjusts the frequency and the voltage of the electric power in accordance with the torque command after compensation.

(Effects of Action)

As described above, in the variable-speed power device 1 according to the present embodiment, the induced voltage angle estimation unit 31 estimates the electrical angle $\theta_{e1}$ of the first rotator 22 in addition to the electrical angle of the induced voltage, based on the voltage, the current, and the electrical angular frequency of the voltage of the electric power for driving the synchronous machine 2.

In this way, the variable-speed power device 1 can dampen the vibration or the like of the first rotator 22 while suppressing the step-out of the synchronous machine 2.

<Hardware Configuration>

Fig. 22 is a diagram showing an example of a hardware configuration of equipment that configures the variable-speed power device according to at least one embodiment of the present disclosure.

Hereinafter, an example of a hardware configuration of the control device 3, the electrical power converter 4, and the second electrical power converter 8 that configure the variable-speed power device 1 will be described with reference to Fig. 22.

As shown in Fig. 22, a computer 1000 includes a processor 1001, a main storage device 1002, an auxiliary storage device 1003, and an interface 1004.

The control device 3, the electrical power converter 4, and the second electrical power converter 8 described in each of the above embodiments are respectively mounted on the computer 1000. Then, the operation of each of the above-described processing units is stored in the auxiliary storage device 1003 in a form of a program. The processor 1001 reads the program from the auxiliary storage device 1003, deploys the program in the main storage device 1002, and executes the processing in accordance with the program. In addition, the processor 1001 secures a storage area used for various kinds of processing in the main storage device 1002 in accordance with the program. In addition, the processor 1001 secures a storage area for storing data being processed in the auxiliary storage device 1003 in accordance with the program.

The program may partially realize functions fulfilled by the computer 1000. For example, the program may be a program that causes the computer 1000 to fulfill the functions in combination with other programs already stored in the auxiliary storage device 1003 or in combination with other programs installed in other devices. In another embodiment, in addition to the above-described configuration or in place of the above-described configuration, the computer 1000 may include a custom large-scale integrated circuit (LSI) such as a programmable logic device (PLD). Examples of the PLD include a programmable array logic (PAL), a generic array logic (GAL), a complex programmable logic device (CPLD), and a field programmable gate array (FPGA). In this case, functions realized by the processor 1001 may be partially or entirely realized by the integrated circuit.

Examples of the auxiliary storage device 1003 include a hard disk drive (HDD), a solid state drive (SSD), a magnetic disk, a magneto-optical disk, a compact disc read-only memory (CD-ROM), a digital versatile disc read-only memory (DVD-ROM), and a semiconductor memory. The auxiliary storage device 1003 may be an internal medium directly connected to a bus of the computer 1000, or may be an external storage device 1010 connected to the computer 1000 via the interface 1004 or a communication line. In addition, in a case where this program is distributed to the computer 1000 via the communication line, the computer 1000 receiving the distribution may deploy the program to the main storage device 1002 and execute the above processing. In at least one embodiment, the auxiliary storage device 1003 and the external storage device 1010 are non-temporary tangible storage media.

As described above, although some embodiments according to the present invention have been described, all of these embodiments are presented as examples and are not intended to limit the scope of the invention. These embodiments can be implemented in various other forms, and various omissions, replacements, and changes can be made without departing from the gist of the invention. These embodiments and modifications thereof are included in the scope of the invention described in the claims and the equivalent scope thereof, as well as in the scope and gist of the invention.

<Additional Notes>

The variable-speed power device and the control method described in the above-described embodiment are understood as follows, for example.

(1) According to a first aspect of the present disclosure, a variable-speed power device (1) includes a synchronous machine (2) that includes a stator (21) provided with an armature winding (212) to form an armature, a first rotator (22) including a magnetic pole (222), and a second rotator (23) provided between the first rotator (22) and the stator (21) to drive a load; an induced voltage angle estimation unit (31) that estimates an electrical angle of an induced voltage

EP 4 401 304 A1

generated in the armature based on a first angle of the first rotator (22) and a second angle of the second rotator (23); and an electrical power converter (4) that adjusts a frequency of electric power for driving the synchronous machine (2) based on the estimated electrical angle of the induced voltage.

(2) According to a second aspect of the present disclosure, in the variable-speed power device (1) according to the first aspect, the induced voltage angle estimation unit (31) includes an interlinked magnetic flux estimation unit (310) that estimates an angle of an interlinked magnetic flux interlinked to the armature winding (212) based on the first angle and the second angle, and a calculation unit (311) that calculates the electrical angle of the induced voltage based on the angle of the interlinked magnetic flux.

(3) According to a third aspect of the present disclosure, in the variable-speed power device (1) according to the second aspect, the interlinked magnetic flux estimation unit (310) estimates the angle of the interlinked magnetic flux based on the first angle measured by a first angle sensor (13) provided in the first rotator (22), and the second angle measured by a second angle sensor (14) provided in the second rotator (23).

(4) According to a fourth aspect of the present disclosure, the variable-speed power device (1) according to the second aspect further includes a first angle estimation unit (32) that estimates the first angle based on the second angle measured by a second angle sensor (14) provided in the second rotator (23) and an electrical angle of a voltage for driving the synchronous machine (2).

(5) According to a fifth aspect of the present disclosure, in the variable-speed power device (1) according to the fourth aspect, the first rotator (22) includes a notch portion (223) formed around a rotation axis.

(6) According to a sixth aspect of the present disclosure, in the variable-speed power device (1) according to the fifth aspect, a length of the notch portion (223) in a radial direction of the first rotator (22) is set to be longer as the notch portion (223) approaches a center of the magnetic pole (222) of the first rotator (22).

(7) According to a seventh aspect of the present disclosure, in the variable-speed power device (1) according to the fifth or sixth aspect, the first rotator (22) further includes a brake winding (224) wound so as to be interlinked to a magnetic flux penetrating a meridian plane including a center of the magnetic pole (222).

(8) According to an eighth aspect of the present disclosure, the variable-speed power device (1) according to the fourth aspect further includes a first electric motor (5) that includes a third rotator (51) mechanically connected to the first rotator (22) of the synchronous machine (2), and an electric line (52) electrically connected in parallel to the armature winding (212) of the synchronous machine (2), and have a synchronous speed equal to that of the synchronous machine (2) or have a pole number equal to that of the synchronous machine (2).

(9) According to a ninth aspect of the present disclosure, the variable-speed power device (1) according to the fourth aspect further includes a speed reducer (6) that is connected to the synchronous machine (2), in which the speed reducer (6) includes a coupling (63) that connects the first rotator (22) and the second rotator (23) of the synchronous machine (2).

(10) According to a tenth aspect of the present disclosure, the variable-speed power device (1) according to the fourth aspect further includes a second electric motor (7) that is connected to the first rotator (22) of the synchronous machine (2); and a second electrical power converter (8) that adjusts a frequency of electric power for driving the second electric motor (7), based on the second angle of the second rotator (23) of the synchronous machine (2).

(11) According to an eleventh aspect of the present disclosure, a variable-speed power device (1) includes a synchronous machine (2) that includes a stator (21) provided with an armature winding (212) to form an armature, a first rotator (22) including a magnetic pole (222), and a second rotator (23) provided between the first rotator (22) and the stator (21); and an electrical power converter (4) that performs V/f control based on an electrical angle having a larger absolute value of an offset with respect to an electrical angle of a voltage for driving the synchronous machine (2) among an electrical angle of the first rotator (22) and an electrical angle of the second rotator (23), and adjusts a frequency of electric power for driving the synchronous machine (2).

(12) According to a twelfth aspect of the present disclosure, a control method for a synchronous machine (2), which includes a stator (21) provided with an armature winding (212) to form an armature, a first rotator (22) including a magnetic pole (222), and a second rotator (23) provided between the first rotator (22) and the stator (21) to drive a load, includes a step of estimating an electrical angle of an induced voltage generated in the armature based on a first angle of the first rotator (22) and a second angle of the second rotator (23); and a step of adjusting a frequency of electric power for driving the synchronous machine (2) based on the estimated electrical angle of the induced voltage.

Industrial Applicability

According to the variable-speed power device and the control method according to the present disclosure, it is possible to suppress the step-out of the synchronous machine.

Reference Signs List

1: variable-speed power device
11: electric power line
13: first angle sensor
14: second angle sensor
2: synchronous machine
21: stator
211: tooth
212: armature winding
213: magnet
22: first rotator
221: core
222: magnetic pole
223: notch portion
224: brake winding
23: second rotator
231: magnetic pole
232: non-magnetic portion
24: output shaft
3: control device
31: induced voltage angle estimation unit
310: interlinked magnetic flux estimation unit
311: calculation unit
312: induced voltage vector estimation unit
314: phase compensation unit
32: first angle estimation unit
33: impedance changing unit
4: electrical power converter
41: calculation function unit
5: first electric motor
51: rotator (third rotator)
52: electric line
6: speed reducer
61: first gear
62: second gear
63: coupling
64: shaft
7: second electric motor
71: rotator (fourth rotator)
8: second electrical power converter
1000: computer
1001: processor
1002: main storage device
1003: auxiliary storage device
1004: interface
1010: external storage device

**Claims**

1. A variable-speed power device comprising:

   a synchronous machine that includes a stator provided with an armature winding to form an armature, a first rotator including a magnetic pole, and a second rotator provided between the first rotator and the stator to drive a load;

an induced voltage angle estimation unit that estimates an electrical angle of an induced voltage generated in the armature based on a first angle of the first rotator and a second angle of the second rotator; and
an electrical power converter that adjusts a frequency of electric power for driving the synchronous machine based on the estimated electrical angle of the induced voltage.

2. The variable-speed power device according to Claim 1,

   wherein the induced voltage angle estimation unit includes
   an interlinked magnetic flux estimation unit that estimates an angle of an interlinked magnetic flux interlinked to the armature winding based on the first angle and the second angle, and
   a calculation unit that calculates the electrical angle of the induced voltage based on the angle of the interlinked magnetic flux.

3. The variable-speed power device according to Claim 2,
   wherein the interlinked magnetic flux estimation unit estimates the angle of the interlinked magnetic flux based on the first angle measured by a first angle sensor provided in the first rotator, and the second angle measured by a second angle sensor provided in the second rotator.

4. The variable-speed power device according to Claim 2, further comprising:
   a first angle estimation unit that estimates the first angle based on the second angle measured by a second angle sensor provided in the second rotator and an electrical angle of a voltage for driving the synchronous machine.

5. The variable-speed power device according to Claim 4,
   wherein the first rotator includes a notch portion formed around a rotation axis.

6. The variable-speed power device according to Claim 5,
   wherein a length of the notch portion in a radial direction of the first rotator is set to be longer as the notch portion approaches a center of the magnetic pole of the first rotator.

7. The variable-speed power device according to Claim 5 or 6,
   wherein the first rotator further includes a brake winding wound so as to be interlinked to a magnetic flux penetrating a meridian plane including a center of the magnetic pole.

8. The variable-speed power device according to Claim 4, further comprising:
   a first electric motor that includes a third rotator mechanically connected to the first rotator of the synchronous machine, and an electric line electrically connected in parallel to the armature winding of the synchronous machine, and have a synchronous speed equal to that of the synchronous machine or have a pole number equal to that of the synchronous machine.

9. The variable-speed power device according to Claim 4, further comprising:

   a speed reducer that is connected to the synchronous machine,
   wherein the speed reducer includes a coupling that connects the first rotator and the second rotator of the synchronous machine.

10. The variable-speed power device according to Claim 4, further comprising:

    a second electric motor that is connected to the first rotator of the synchronous machine; and
    a second electrical power converter that adjusts a frequency of electric power for driving the second electric motor, based on the second angle of the second rotator of the synchronous machine.

11. A variable-speed power device comprising:

    a synchronous machine that includes a stator provided with an armature winding to form an armature, a first rotator including a magnetic pole, and a second rotator provided between the first rotator and the stator; and
    an electrical power converter that performs V/f control based on an electrical angle having a larger absolute value of an offset with respect to an electrical angle of a voltage for driving the synchronous machine among an electrical angle of the first rotator and an electrical angle of the second rotator, and adjusts a frequency of electric power for driving the synchronous machine.

12. A control method for a synchronous machine that includes a stator provided with an armature winding to form an armature, a first rotator including a magnetic pole, and a second rotator provided between the first rotator and the stator to drive a load, the control method comprising:

a step of estimating an electrical angle of an induced voltage generated in the armature based on a first angle of the first rotator and a second angle of the second rotator; and
a step of adjusting a frequency of electric power for driving the synchronous machine based on the estimated electrical angle of the induced voltage.

# FIG. 1

FREQUENCY COMMAND OF ELECTRIC POWER

ELECTRICAL ANGLE OF
INDUCED VOLTAGE

ELECTRICAL ANGLE OF
SECOND ROTATOR

ELECTRICAL POWER
CONVERTER — 4

1

11

2

TO
LOAD

O 13  24A

22

21

23  14

24

TO
LOAD

ANGLE OF FIRST ROTATOR

ANGLE OF SECOND ROTATOR

CONTROL DEVICE

3

$\dfrac{1}{P_2}$

31

INTERLINKED MAGNETIC
FLUX ESTIMATION UNIT

$\pi/2$

311

310

+
+

EP 4 401 304 A1

# FIG. 2

# FIG. 3

FREQUENCY COMMAND
OF ELECTRIC POWER

/4

/41   ELECTRICAL POWER CONVERTER

ELECTRICAL
ANGULAR FREQUENCY
OF LOAD SHAFT

ELECTRICAL ANGLE OF
SECOND ROTATOR → DIFFERENTIATE

SPEED CONTROLLER

TORQUE COMMAND

ELECTRICAL ANGLE OF
INDUCED VOLTAGE → VECTOR CONTROLLER

FREQUENCY COMMAND

VOLTAGE
COMMAND

# FIG. 4

FREQUENCY COMMAND OF ELECTRIC POWER

1

ELECTRICAL ANGLE OF
INDUCED VOLTAGE

ELECTRICAL ANGLE OF
SECOND ROTATOR

ELECTRICAL
POWER
CONVERTER

4

11

2

O

22

21

23

14

24

TO
LOAD

ANGLE OF SECOND ROTATOR

CONTROL DEVICE

3

$\dfrac{1}{P_2}$

ELECTRICAL ANGLE OF VOLTAGE

32

FIRST ANGLE
ESTIMATION UNIT

ANGLE OF FIRST ROTATOR

31

π/2

311

+

+

INTERLINKED MAGNETIC
FLUX ESTIMATION UNIT

310

## FIG. 5

## FIG. 6

# FIG. 7

# FIG. 8

FREQUENCY COMMAND OF ELECTRIC POWER

ELECTRICAL ANGLE OF
INDUCED VOLTAGE

ELECTRICAL
POWER
CONVERTER

ELECTRICAL ANGLE OF
SECOND ROTATOR

52

O

5

51    22    21    23    24    14    TO
                                    LOAD

ANGLE OF SECOND ROTATOR

CONTROL DEVICE    3

$\dfrac{1}{P_2}$

ELECTRICAL ANGLE OF VOLTAGE

32    FIRST ANGLE
      ESTIMATION UNIT

ANGLE OF FIRST ROTATOR    31

$\pi/2$    311

+    INTERLINKED MAGNETIC
     FLUX ESTIMATION UNIT

+

310

# FIG. 9

FREQUENCY COMMAND OF ELECTRIC POWER

ELECTRICAL ANGLE OF
INDUCED VOLTAGE

ELECTRICAL ANGLE OF
SECOND ROTATOR

ELECTRICAL
POWER
CONVERTER

TO
LOAD

ANGLE OF SECOND ROTATOR

CONTROL DEVICE

$\dfrac{1}{P_2}$

ELECTRICAL ANGLE OF VOLTAGE

FIRST ANGLE
ESTIMATION UNIT

ANGLE OF FIRST ROTATOR

$\pi/2$

INTERLINKED MAGNETIC
FLUX ESTIMATION UNIT

# FIG. 10

FREQUENCY COMMAND OF ELECTRIC POWER

ELECTRICAL ANGLE OF
INDUCED VOLTAGE

ELECTRICAL
POWER
CONVERTER

TO LOAD

SECOND ELECTRICAL POWER CONVERTER

TARGET
FREQUENCY

$$\frac{p_1 n_{12}}{2}$$

$$\frac{1}{2\pi}\frac{d}{dt}$$

ANGLE OF SECOND
ROTATOR

ANGLE OF SECOND
ROTATOR

CONTROL DEVICE

FIRST ANGLE
ESTIMATION UNIT

ELECTRICAL ANGLE OF VOLTAGE

ANGLE OF FIRST ROTATOR

$\pi/2$

INTERLINKED MAGNETIC
FLUX ESTIMATION UNIT

# FIG. 11

FREQUENCY COMMAND OF ELECTRIC POWER

ELECTRICAL ANGLE OF INDUCED
VOLTAGE OF SECOND ROTATOR

ELECTRICAL ANGLE OF INDUCED
VOLTAGE OF FIRST ROTATOR

ELECTRICAL
POWER
CONVERTER — 4

1

11

2

O  13  24A

TO
LOAD

22

21

23

14

TO
LOAD

24

ANGLE OF FIRST ROTATOR          ANGLE OF SECOND ROTATOR

CONTROL DEVICE

31

3

$\pi/2$

$\dfrac{2}{P_1}$

$\dfrac{1}{P_2}$

+

+

311

$\pi/2$

+

+

# FIG. 12

FREQUENCY COMMAND OF ELECTRIC POWER

ELECTRICAL POWER CONVERTER

41

411

ADJUSTMENT VALUE OF FREQUENCY COMMAND

−π/4    0
    +π/4

FINAL OFFSET

MAXIMUM VALUE SELECTOR FOR ABSOLUTE VALUE

OFFSET 1          OFFSET 2

ELECTRICAL ANGLE OF INDUCED VOLTAGE OF FIRST ROTATOR

ELECTRICAL ANGLE OF INDUCED VOLTAGE OF SECOND ROTATOR

ELECTRICAL ANGLE $\theta_V$ OF VOLTAGE

INTEGRATE

SETTING FUNCTION

VOLTAGE COMMAND

FREQUENCY COMMAND OF ELECTRIC POWER AFTER ADJUSTMENT

4

# FIG. 13

# FIG. 14

FREQUENCY COMMAND
OF ELECTRIC POWER

/4

/41    ELECTRICAL POWER CONVERTER

411

ELECTRICAL ANGLE
OF LOAD SHAFT

LOAD ADJUSTER

FREQUENCY COMMAND
OF ELECTRIC POWER
AFTER ADJUSTMENT

DIFFERENTIATE

$2\pi$

SPEED CONTROLLER

TORQUE
COMMAND

ELECTRICAL ANGLE
OF INDUCED VOLTAGE

VECTOR CONTROLLER

FREQUENCY COMMAND

VOLTAGE
COMMAND

$\omega_e$

# FIG. 15

## FIG. 16

FREQUENCY COMMAND OF ELECTRIC POWER

ELECTRICAL
POWER
CONVERTER

4

1

11

2

O

23

TO
LOAD

22

24

21

CONTROL DEVICE

3

CURRENT i  VOLTAGE v  $\omega_e$

INDUCED VOLTAGE
VECTOR ESTIMATION UNIT

LOAD ANGLE $\delta$

312

## FIG. 17

FREQUENCY COMMAND OF ELECTRIC POWER

ELECTRICAL POWER CONVERTER — 4

41

ADJUSTMENT VALUE OF
FREQUENCY COMMAND

$-\pi/4$ | 0
$+\pi/4$

LOAD ANGLE $\delta$

LOAD
ANGLE $\delta$

$2\pi$

0

INTEGRATE

ELECTRICAL ANGLE $\theta_V$
OF VOLTAGE

$\omega_e$

FREQUENCY COMMAND OF ELECTRIC
POWER AFTER ADJUSTMENT

## FIG. 18

$\dot{V}$

$\sigma$

REAL
AXIS

$\dot{Z}\dot{I}$

$\dot{E}$

$\dot{I}$

IMAGINARY
AXIS

# FIG. 19

1

FREQUENCY COMMAND OF ELECTRIC POWER

4

ELECTRICAL POWER CONVERTER

11

2

23

O

TO LOAD

24

22

21

CONTROL DEVICE

3

REACTIVE ELECTRIC POWER

ACTIVE ELECTRIC POWER

CURRENT i   VOLTAGE v   $\omega_e$   $\dot{Z}$   $\omega_e$

INDUCED VOLTAGE VECTOR ESTIMATION UNIT

IMPEDANCE CHANGING UNIT

LOAD ANGLE $\delta$

312

33

EP 4 401 304 A1

# FIG. 20

FREQUENCY COMMAND OF ELECTRIC POWER

ELECTRICAL ANGLE OF INDUCED VOLTAGE

ELECTRICAL POWER CONVERTER — 4

1

ELECTRICAL ANGLE OF INDUCED VOLTAGE OF LOAD SHAFT

11

2

O

23

14

TO LOAD

24

22

21

CONTROL DEVICE

3

CURRENT i   VOLTAGE v   $\omega_e$

$\frac{1}{P_2}$

INDUCED VOLTAGE VECTOR ESTIMATION UNIT — 312

$\theta_{e2}$

$\theta_{e1}$

COMPENSATION TORQUE

PHASE COMPENSATION UNIT — 314

+
$\pi/2$
+

# FIG. 21

FREQUENCY COMMAND
OF ELECTRIC POWER

4

41  ELECTRICAL POWER CONVERTER

ELECTRICAL
ANGULAR FREQUENCY
OF LOAD SHAFT

ELECTRICAL ANGLE OF
SECOND ROTATOR → DIFFERENTIATE

SPEED CONTROLLER

TORQUE COMMAND

COMPENSATION
TORQUE

−  +

TORQUE COMMAND
AFTER COMPENSATION

ELECTRICAL ANGLE OF
INDUCED VOLTAGE → VECTOR CONTROLLER

FREQUENCY COMMAND

VOLTAGE
COMMAND

# FIG. 22

1000

PROCESSOR  1001

1002  1003  1004  1010

MAIN STORAGE
DEVICE

AUXILIARY STORAGE
DEVICE

INTERFACE

EXTERNAL STORAGE
DEVICE

# FIG. 23

9A

92

SPEED COMMAND
OF LOAD SHAFT

ELECTRICAL POWER
CONVERTER — 91

SPEED REDUCER

— 93

TO
LOAD

95

902A

901A

94

90A

# FIG. 24

9B

FREQUENCY COMMAND OF
ELECTRIC POWER

ELECTRICAL POWER
CONVERTER — 91

— 93

903B

94A

TO
LOAD

TO
LOAD

902B

901B

94

90B

# EP 4 401 304 A1

<table>
<tr><td colspan="2">INTERNATIONAL SEARCH REPORT</td><td>International application No.<br><br>**PCT/JP2022/031347**</td></tr>
</table>

**A.    CLASSIFICATION OF SUBJECT MATTER**

     *H02P 25/024*(2016.01)i; *H02K 16/02*(2006.01)i; *H02P 5/46*(2006.01)i; *H02P 23/14*(2006.01)i
     FI:    H02P25/024; H02P23/14; H02P5/46 H; H02K16/02

According to International Patent Classification (IPC) or to both national classification and IPC

**B.    FIELDS SEARCHED**

Minimum documentation searched (classification system followed by classification symbols)

     H02P25/024; H02K16/02; H02P5/46; H02P23/14

Documentation searched other than minimum documentation to the extent that such documents are included in the fields searched

     Published examined utility model applications of Japan 1922-1996
     Published unexamined utility model applications of Japan 1971-2022
     Registered utility model specifications of Japan 1996-2022
     Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2019/022100 A1 (PANASONIC CORP) 31 January 2019 (2019-01-31)<br>entire text, all drawings | 1–12 |
| A | US 2021/0265905 A1 (EBM-PAPST MULFINGEN GMBH & CO. KG) 26 August 2021 (2021-08-26)<br>entire text, all drawings | 1–12 |
| A | CN 110880893 A (HUAZHONG UNIVERSITY OF SCIENCE AND TECHNOLOGY) 13 March 2020 (2020-03-13)<br>entire text, all drawings | 1–12 |
| A | CN 111030531 A (BINZHOU UNIVERSITY) 17 April 2020 (2020-04-17)<br>entire text, all drawings | 1–12 |

☐ Further documents are listed in the continuation of Box C.  ☑ See patent family annex.

| | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 October 2022** | **01 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2022/031347**

| Patent document cited in search report | | | Publication date (day/month/year) | Patent family member(s) | | | Publication date (day/month/year) |
|---|---|---|---|---|---|---|---|
| WO | 2019/022100 | A1 | 31 January 2019 | US | 2020/0161948 | A1 | |
| | | | | entire text, all drawings | | | |
| | | | | EP | 3661034 | A1 | |
| US | 2021/0265905 | A1 | 26 August 2021 | WO | 2019/204848 | A1 | |
| | | | | EP | 3785357 | A1 | |
| | | | | DE | 102018110151 | A1 | |
| CN | 110880893 | A | 13 March 2020 | (Family: none) | | | |
| CN | 111030531 | A | 17 April 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021171614 A
- WO 2015186714 A